# EUROPÄISCHE PATENTSCHRIFT

(11) **EP 2 794 187 B1**
(45) Veröffentlichungstag und Bekanntmachung des Hinweises auf die Patenterteilung: **22.03.2017**
(21) Anmeldenummer: 12794218.3
(22) Anmeldetag: 15.11.2012
(51) Int. Cl.: B24B 23/02, B25F 5/00, H01H 3/20, H01H 9/06

(54) **WERKZEUGMASCHINE**
MACHINE TOOL
MACHINE-OUTIL

(30) Priorität: 23.12.2011 DE 102011089722
(43) Veröffentlichungstag der Anmeldung: 29.10.2014
(73) Patentinhaber: Robert Bosch GmbH, 70442 Stuttgart (DE)
(72) Erfinder: BOECK, Cornelius, 73230 Kirchheim (DE); BARTH, Daniel, 70771 Leinfelden-Echterdingen (DE); SCHADOW, Joachim, 70563 Stuttgart (DE); ANDRASIC, Sinisa, 71101 Schönaich (DE)
(86) Internationale Anmeldenummer: PCT/EP2012/072747
(87) Internationale Veröffentlichungsnummer: WO 2013/092028

(56) Entgegenhaltungen:
- WO-A1-03/057395
- DE-A1- 4 130 174
- DE-A1- 19 707 215
- DE-U1- 9 320 029
- DE-U1- 20 116 066

## Beschreibung

### Stand der Technik

Aus der DE 197 07 215 A1 ist bereits eine Werkzeugmaschine, insbesondere eine Winkelschleifmaschine, bekannt, die eine Schalteinheit umfasst, welche ein beweglich gelagertes Schaltklinkenelement und ein Freigabeelement zu einer Entriegelung einer Bewegungssperre des Schaltklinkenelements aufweist.

In der Druckschrift DE 197 07 215 A1 ist ein Schaltermechanismus für ein elektrisch betriebenes Werkzeug beschrieben. Der Schaltermechanismus umfasst einen Schalterhebel, der drehbar gelagert ist, sowie einen Sicherheitstaster.

### Offenbarung der Erfindung

Die Erfindung geht aus von einer Werkzeugmaschine, insbesondere von einer Winkelschleifmaschine, mit zumindest einer Schalteinheit, die zumindest ein beweglich gelagertes Schaltklinkenelement und zumindest ein Freigabeelement zu einer Entriegelung einer Bewegungssperre des Schaltklinkenelements aufweist.

Es wird vorgeschlagen, dass zumindest ein Betätigungsbereich des Freigabeelements zumindest teilweise seitlich neben einer Bedienfläche des Schaltklinkenelements angeordnet ist. Die Werkzeugmaschine ist vorzugsweise als tragbare Werkzeugmaschine, insbesondere als tragbare, handgehaltene Werkzeugmaschine, ausgebildet. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 7 kg. Die tragbare Werkzeugmaschine ist besonders bevorzugt als Winkelschleifmaschine ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Bohr- und/oder Meißelhammer, als Bohrmaschine, als Säbelsäge, als Stichsäge, als Heckenschere usw..

Der Begriff "Schalteinheit" soll hier insbesondere eine Einheit definieren, die zumindest ein Bauteil, insbesondere das Schaltklinkenelement, aufweist, das direkt von einem Bediener betätigbar ist und die dazu vorgesehen ist, durch eine Betätigung und/oder durch eine Eingabe von Parametern einen Prozess und/oder einen Zustand einer mit der Schalteinheit gekoppelten Einheit zu beeinflussen und/oder zu ändern. Das Schaltklinkenelement ist vorzugsweise zu einer Betätigung zumindest eines Schaltelements der Schalteinheit vorgesehen. Unter einem "Schaltklinkenelement" soll hier insbesondere ein Bedienelement verstanden werden, das entlang einer Längserstreckungsrichtung des Bedienelements eine Längserstreckung aufweist, die größer ist als eine zumindest im Wesentlichen senkrecht zur Längserstreckungsrichtung verlaufende Quererstreckung des Bedienelements, die zumindest im Wesentlichen quer zu einer Hauptbewegungsrichtung des Bedienelements verläuft. Insbesondere ist eine maximale Längserstreckung des Schaltklinkenelements zumindest 2-mal größer, bevorzugt zumindest 4-mal größer und besonders bevorzugt zumindest 6-mal größer als eine maximale Quererstreckung des Schaltklinkenelements. Das Schaltklinkenelement weist insbesondere eine maximale Längserstreckung auf, die größer ist als 3 cm, bevorzugt größer ist als 6 cm und besonders bevorzugt größer ist als 8 cm.

Ferner umfasst das Schaltklinkenelement bevorzugt eine Bedienfläche, insbesondere eine von einem Griffflächenbereich des Schaltklinkenelements gebildete Bedienfläche, auf der ein Bediener zumindest drei Finger zu einer Betätigung des Schaltklinkenelements anordnen kann und die zumindest eine entlang der Längserstreckungsrichtung des Schaltklinkenelements verlaufende Längserstreckung aufweist, die größer ist als 5 cm. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Vorzugsweise ist die Schalteinheit dazu vorgesehen, mittels einer Betätigung des Schaltklinkenelements das Schaltelement zu betätigen, um einen Stromkreis zu einer Energieversorgung zumindest einer Antriebseinheit der Werkzeugmaschine zu öffnen oder zu schließen. Somit ist die Schalteinheit bevorzugt dazu vorgesehen, eine Inbetriebnahme oder eine Deaktivierung der Werkzeugmaschine zu ermöglichen. Unter "vorgesehen" soll insbesondere speziell ausgelegt und/oder speziell ausgestattet verstanden werden. Das Schaltelement wird bevorzugt von einem mechanischen, elektrischen und/oder elektronischen Schaltelement gebildet.

Unter einer "Bewegungssperre" soll hier insbesondere ein Sperrmechanismus verstanden werden, der dazu vorgesehen ist, zumindest in einem Betriebszustand eine Bewegung eines beweglich gelagerten Bauteils entlang zumindest einer Strecke und/oder um zumindest eine Achse mittels einer mechanischen, elektrischen und/oder elektronischen Sperre weitestgehend zu verhindern. Bevorzugt ist die Bewegungssperre dazu vorgesehen, zumindest in einem Betriebszustand mittels einer mechanischen Sperre eine Bewegung des beweglich gelagerten Schaltklinkenelements weitestgehend zu verhindern. Es ist jedoch auch denkbar, dass die Bewegungssperre zumindest in einem Betriebszustand mittels einer elektromagnetischen Krafteinwirkung und/oder einer permanentmagnetischen Krafteinwirkung, wie beispielsweise mittels verschiebbarer Magnete, auf das Schaltklinkenelement eine Bewegung des Schaltklinkenelements weitestgehend verhindert. Bevorzugt ist die Bewegungssperre durch das Freigabeelement der Schalteinheit entriegelbar, um eine Bewegung des Schaltklinkenelements infolge einer Betätigung des Schaltklinkenelements zu ermöglichen. Der Ausdruck "Betätigungsbereich" soll hier insbesondere einen Bereich des Freigabeelements definieren, der von einem Bediener in einem an der Werkzeugmaschine montierten Zustand des Freigabeelements zu einer Betätigung bzw. zu einer Bewegung des Freigabeelements direkt berührbar ist. Unter "seitlich neben" soll hier insbesondere eine Anordnung des Betätigungsbereichs des Freigabeelements relativ zum Schaltklinkenelement verstanden werden, wobei der Betätigungsbereich entlang einer zumindest im Wesentlichen senkrecht zu einem Seitenwandbereich des Schaltklinkenelements verlaufenden Richtung betrachtet, insbesondere ausgehend von dem Seitenwandbereich in eine von dem Schaltklinkenelement abgewandte Richtung betrachtet, relativ zum Schaltklinkenelement beabstandet angeordnet ist. Der Seitenwandbereich verläuft besonders bevorzugt zumindest im Wesentlichen senkrecht zu einem Griffflächenbereich des Schaltklinkenelements, der eine Grifffläche des Schaltklinkenelements bildet. Somit ist das Freigabeelement bevorzugt außerhalb der Bedienfläche des Schaltklinkenelements angeordnet. Besonders bevorzugt ist das Freigabeelement außerhalb des Schaltklinkenelements an der Werkzeugmaschine angeordnet. Mittels der erfindungsgemäßen Ausgestaltung der Werkzeugmaschine, insbesondere mittels einer Anordnung des Betätigungsbereichs des Freigabeelements seitlich neben dem Schaltklinkenelement, kann vorteilhaft eine ergonomische Handhabung des Freigabeelements realisiert werden. Ein Bediener kann komfortabel mit einer Hand das Schaltklinkenelement halten bzw. betätigen, während der Bediener mit einem Finger der Hand das Freigabeelement betätigt. Ferner kann vorteilhaft verhindert werden, dass eine Bewegungssperre des Schaltklinkenelements infolge einer unbeabsichtigten Betätigung des Schaltklinkenelements gelöst werden kann, da das Freigabeelement außerhalb der Bedienfläche des Schaltklinkenelements angeordnet ist.

Des Weiteren wird vorgeschlagen, dass das Freigabeelement schwenkbar und/oder drehbar um zumindest eine Freigabebewegungsachse gelagert ist. Mittels der erfindungsgemäßen Ausgestaltung kann vorteilhaft ein komfortabel zu bedienendes Freigabeelement erreicht werden.

Erfindungsgemäß weist das Freigabeelement zumindest eine Freigabebewegungsachse auf, die in einer sich zumindest im Wesentlichen senkrecht zu einer Bewegungsachse des Schaltklinkenelements erstreckenden Ebene verläuft. Besonders bevorzugt ist die Freigabebewegungsachse als Schwenkachse ausgebildet. Somit weist das Freigabeelement vorzugsweise eine Schwenkachse auf, die in einer sich zumindest im Wesentlichen senkrecht zu einer Bewegungsachse des Schaltklinkenelements erstreckenden Ebene verläuft. Es kann konstruktiv einfach eine Anordnung des Freigabeelements relativ zum Schaltklinkenelement erreicht werden, die eine komfortable Bedienbarkeit des Freigabeelements, insbesondere eine komfortable Betätigung des Betätigungsbereichs des Freigabeelements, mittels eines Fingers einer Hand eines Bedieners ermöglicht. Somit kann vorteilhaft ein hoher Bedienkomfort erreicht werden.

Zudem wird vorgeschlagen, dass die Schalteinheit zumindest ein weiteres Freigabeelement aufweist. Bevorzugt weist das weitere Freigabeelement eine weitere Freigabebewegungsachse auf, die zumindest im Wesentlichen parallel zur Freigabebewegungsachse des Freigabeelements verläuft. Hierbei ist die weitere Freigabebewegungsachse als Schwenkachse ausgebildet. In einer alternativen Ausgestaltung der erfindungsgemäßen Werkzeugmaschine weist das weitere Freigabeelement vorzugsweise eine weitere Freigabebewegungsachse auf, die identisch mit der Freigabebewegungsachse des Freigabeelements ausgebildet ist. Mittels der erfindungsgemäßen Ausgestaltung kann vorteilhaft eine komfortable Bedienbarkeit des Freigabeelements und/oder des weiteren Freigabeelements für Rechts- und für Linkshänder erreicht werden.

Vorteilhafterweise umfasst die erfindungsgemäße Werkzeugmaschine eine Bewegungsabhängigkeitseinheit, die das Freigabeelement und das weitere Freigabeelement zumindest in einem montierten Zustand bewegungstechnisch miteinander koppelt. Unter einer "Bewegungsabhängigkeitseinheit" soll hier insbesondere eine Einheit verstanden werden, die dazu vorgesehen ist, zumindest ein Element in Abhängigkeit einer Bewegung zumindest eines weiteren Elements zu bewegen, wobei das Element vorzugsweise entlang einer einer Bewegungsrichtung des weiteren Elements abweichend, und insbesondere entgegengesetzt, ausgerichteten Richtung, und/oder entlang einer der Bewegungsrichtung des weiteren Elements gleichgerichteten Richtung bewegt wird. Besonders bevorzugt wird die Bewegungsabhängigkeitseinheit von einer Mechanikbewegungseinheit gebildet, die das Freigabeelement und das weitere Freigabeelement mittels eines mechanischen Mechanismus bewegungstechnisch miteinander koppelt. Es ist jedoch auch denkbar, dass die Bewegungsabhängigkeitseinheit von einer anderen, einem Fachmann als sinnvoll erscheinenden Einheit gebildet wird, wie beispielsweise von einer Magnetbewegungseinheit, die das Freigabeelement und das weitere Freigabeelement mittels magnetischer Kräfte bewegungstechnisch miteinander koppelt. Mittels der erfindungsgemäßen Ausgestaltung kann vorteilhaft eine zumindest im Wesentlichen gleichzeitige Bewegung des Freigabeelements und des weiteren Freigabeelements infolge einer Betätigung des Freigabeelements oder des weiteren Freigabeelements erreicht werden. Ferner kann vorteilhaft eine komfortable Entriegelung der Bewegungssperre des Schaltklinkenelements mittels einer Betätigung des Freigabeelements oder des weiteren Freigabeelements erreicht werden, wobei vorteilhaft lediglich eines der Freigabeelemente zu einer Entriegelung der Bewegungssperre betätigt werden muss.

Des Weiteren wird vorgeschlagen, dass die erfindungsgemäße Werkzeugmaschine zumindest ein Handgriffgehäuse umfasst, wobei das Freigabeelement und das weitere Freigabeelement infolge einer Betätigung des Freigabeelements oder des weiteren Freigabeelements in eine dem Handgriffgehäuse zugewandte Richtung mittels der Bewegungsabhängigkeitseinheit in eine dem Handgriffgehäuse zugewandte Richtung bewegt werden. Unter einem "Handgriffgehäuse" soll hier insbesondere zumindest ein Gehäuse oder zumindest ein Gehäuseteilbereich verstanden werden, das bzw. der von einer Lagerung einer Antriebs- und/oder Abtriebseinheit der Werkzeugmaschine weitestgehend entkoppelt ist, wobei zumindest ein Griffbereich des Gehäuses oder der Gehäuseteilbereich, insbesondere ein als stielförmiger Griffbereich ausgebildeter Gehäuseteilbereich, von einem Bediener zu einer Handhabung der Werkzeugmaschine mit zumindest einer Hand zumindest größtenteils umgreifbar ist. Der Ausdruck "größtenteils umgreifbar" soll hier insbesondere eine Umgreifbarkeit eines Bauteils oder eines Bauteilbereichs mittels einer Hand eines Bedieners entlang zumindest mehr als 70 %, bevorzugt mehr als 80 % und besonders bevorzugt mehr als 90 % einer Gesamterstreckung eines in einer sich zumindest im Wesentlichen senkrecht zu einer Längserstreckungsrichtung des Bauteils oder des Bauteilbereichs erstreckenden Ebene verlaufenden Gesamtaußenumfangs des Bauteils oder des Bauteilbereichs definieren, wobei die Gesamterstreckung des Gesamtumfangs insbesondere kleiner ist als 40 cm, bevorzugt kleiner ist als 30 cm und besonders bevorzugt kleiner ist als 25 cm. Vorzugsweise liegen bei einem Umgreifen des Bauteils oder des Bauteilbereichs eine Handinnenfläche und Fingerinnenflächen der Hand des Bedieners zumindest entlang einer Strecke größer als 70 %, bevorzugt größer als 80 % und besonders bevorzugt größer als 90 % der Gesamterstreckung des Gesamtaußenumfangs am Gesamtaußenumfang an. Vorzugsweise ist der stielförmige Griffbereich, entlang einer Rotationsachse eines Antriebselements, insbesondere einer Ankerwelle, einer Antriebseinheit der Werkzeugmaschine und insbesondere entlang der Haupterstreckungsrichtung der Werkzeugmaschine betrachtet, hinter der Antriebseinheit angeordnet. Zudem ist es denkbar, dass das Handgriffgehäuse zusätzlich zum stielförmigen Griffbereich einen bügelförmigen Teilbereich aufweist, der einstückig an den stielförmigen Griffbereich angeformt ist. Der bügelförmige Teilbereich kann vorzugsweise eine L-förmige Ausgestaltung aufweisen, die sich ausgehend von einem dem Anbindungsbereich des Handgriffgehäuses abgewandten Ende des stielförmigen Griffbereichs L-förmig in Richtung des Anbindungsbereichs erstreckt. Bevorzugt ist das Handgriffgehäuse getrennt von einem Antriebsgehäuse der Werkzeugmaschine ausgebildet, das dazu vorgesehen ist, die Antriebs- und/oder Abtriebseinheit zu einer Abstützung von Antriebs- und/oder Abtriebslagerkräften aufzunehmen. Es ist jedoch auch denkbar, dass das Handgriffgehäuse und das Antriebsgehäuse einstückig ausgebildet sind.

Vorzugsweise weist das Handgriffgehäuse einen stielförmigen Griffbereich auf. Der Ausdruck "stielförmiger Griffbereich" soll hier insbesondere einen Gehäuseteilbereich des Handgriffgehäuses definieren, der in einer Längsschnittebene, in der sich die Haupterstreckungsrichtung der Werkzeugmaschine erstreckt, entlang einer zumindest im Wesentlichen senkrecht zur Haupterstreckungsrichtung verlaufenden Richtung betrachtet, eine maximale Erstreckung, insbesondere kleiner als 10 cm, bevorzugt kleiner als 8 cm und besonders bevorzugt kleiner als 6 cm, aufweist, wobei zumindest eine Bedienfläche des Handgriffgehäuses im Gehäuseteilbereich des Handgriffgehäuses angeordnet ist. Bevorzugt wird die maximale Erstreckung, betrachtet in der Längsschnittebene, von zumindest zwei parallelen Geraden oder von zumindest zwei um einen Winkel kleiner als 10°, bevorzugt kleiner als 8° und besonders bevorzugt kleiner als 6° relativ zueinander geneigten Geraden begrenzt, die von einer Außenkontur des Gehäuseteilbereichs des Handgriffgehäuses gebildet werden. Der stielförmige Griffbereich ist insbesondere zumindest um einen Winkel kleiner als 60°, bevorzugt kleiner als 40° und besonders bevorzugt kleiner als 30° relativ zu einer Haupterstreckungsrichtung der Werkzeugmaschine geneigt angeordnet. Besonders bevorzugt umfasst das Handgriffgehäuse zumindest zwei Handgriffgehäuseschalenelemente, die in einer Verbindungsebene miteinander verbindbar sind. Somit weist das Handgriffgehäuse bevorzugt eine Schalenbauweise auf. Es ist jedoch auch denkbar, dass das Handgriffgehäuse eine Topfbauweise aufweist. Das Freigabeelement und das weitere Freigabeelement sind besonders bevorzugt jeweils an einer der Handgriffgehäuseschalenelemente angeordnet. Mittels der erfindungsgemäßen Ausgestaltung kann vorteilhaft infolge einer Betätigung des Freigabeelements oder des weiteren Freigabeelements ein Einschwenken des Freigabeelements und des weiteren Freigabeelements in das Handgriffgehäuse hinein ermöglicht werden.

Vorteilhafterweise ist das weitere Freigabeelement spiegelsymmetrisch zum Freigabeelement angeordnet. Es kann somit vorteilhaft eine besonders ergonomische Anordnung des Freigabeelements und des weiteren Freigabeelements für Rechts- sowie für Linkshänder erreicht werden.

Ferner wird vorgeschlagen, dass das weitere Freigabeelement zumindest einen Betätigungsbereich aufweist, der, bezogen auf eine sich zumindest im Wesentlichen senkrecht zu einer Bewegungsachse des Schaltklinkenelements erstreckende Ebene, spiegelsymmetrisch zum Betätigungsbereich des Freigabeelements zumindest teilweise seitlich neben der Bedienfläche des Schaltklinkenelements angeordnet ist. Es ist jedoch auch denkbar, dass das weitere Freigabeelement eine andere, einem Fachmann als sinnvoll erscheinende Anordnung relativ zum Freigabeelement aufweist, die eine ergonomische Bedienbarkeit des Freigabeelements und des weiteren Freigabeelements für Rechts- sowie für Linkshänder ermöglicht. Mittels der erfindungsgemäßen Anordnung des Betätigungsbereichs des weiteren Freigabeelements kann vorteilhaft eine komfortable Bedienbarkeit des Freigabeelements und/oder des weiteren Freigabeelements erreicht werden.

Besonders bevorzugt sind das Freigabeelement und das weitere Freigabeelement relativ beweglich zueinander gelagert. Hierdurch können besonders vorteilhaft Bewegungen des Freigabeelements und des weiteren Freigabeelements infolge einer Betätigung des Freigabeelements oder des weiteren Freigabeelements in voneinander verschiedene Richtungen ermöglicht werden.

Ferner wird vorgeschlagen, dass die Werkzeugmaschine zumindest die Bewegungsabhängigkeitseinheit umfasst, die dazu vorgesehen ist, infolge einer Betätigung des Freigabeelements oder des weiteren Freigabeelements das Freigabeelement und das weitere Freigabeelement in entgegengesetzt gerichtete Richtungen zu bewegen. Es kann vorteilhaft bei einer Anordnung des Freigabeelements an einer dem weiteren Freigabeelement abgewandten Seite des Handgriffgehäuses infolge einer Betätigung des Freigabeelements und des weiteren Freigabeelements eine Bewegung des Freigabeelements und des weiteren Freigabeelements in das Handgriffgehäuse hinein ermöglicht werden.

Vorteilhafterweise ist die Bewegungsabhängigkeitseinheit als Gelenkeinheit ausgebildet. Unter einer "Gelenkeinheit" soll hier insbesondere eine Einheit verstanden werden, die zumindest zwei Bauteile beweglich relativ zueinander, insbesondere schwenkbar und/oder drehbar relativ zueinander, miteinander verbindet, wobei eine Bewegung eines der Bauteile über eine Gelenkstelle der Einheit eine Bewegung des anderen Bauteils hervorruft. Die Gelenkstelle kann hierbei beispielsweise als Verzahnung ausgebildet sein oder eine andere, einem Fachmann als sinnvoll erscheinende Ausgestaltung aufweisen. Somit kann konstruktiv einfach eine Bewegungsabhängigkeit zwischen dem Freigabeelement und dem weiteren Freigabeelement erreicht werden, insbesondere bei einer schwenkbaren Lagerung des Freigabeelements und des weiteren Freigabeelements.

Bevorzugt ist die Bewegungsabhängigkeitseinheit als Gelenkeinheit ausgebildet, die zumindest ein Gelenkelement aufweist, das einstückig mit dem Freigabeelement oder dem weiteren Freigabeelement ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es kann vorteilhaft eine kompakte Anordnung des Gelenkelements am Freigabeelement oder am weiteren Freigabeelement erreicht werden. Ferner können vorteilhaft Bauraum, Bauteile und Kosten eingespart werden.

Zudem wird vorgeschlagen, dass die Schalteinheit zumindest ein Federelement aufweist, das dazu vorgesehen ist, zumindest das Freigabeelement mit einer Federkraft in Richtung einer Verriegelungsstellung des Freigabeelements zu beaufschlagen. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Bevorzugt wird das Federelement von einer Druckfeder gebildet. Es ist jedoch auch denkbar, dass das Federelement eine andere, einem Fachmann als sinnvoll erscheinende Ausgestaltung aufweist, wie beispielsweise eine Ausgestaltung als Zugfeder usw.. Mittels des Federelements kann vorteilhaft eine selbsttätige Bewegung des Freigabeelements in die Verriegelungsstellung erreicht werden, insbesondere nachdem ein Bediener eine Krafteinwirkung auf das Schaltklinkenelement aufgehoben hat und sich das Schaltklinkenelement in einer Ausgangsstellung des Schaltklinkenelements befindet.

Vorteilhafterweise weist die Schalteinheit zumindest das Federelement auf, das sich mit einem Ende an dem Freigabeelement abstützt und mit einem weiteren Ende an einem weiteren Freigabeelement der Schalteinheit abstützt. Es ist jedoch auch denkbar, dass die Schalteinheit zumindest zwei Federelemente aufweist, wobei ein Federelement dem Freigabeelement zugeordnet ist und ein Federelement dem weiteren Freigabeelement zugeordnet ist. Mittels der erfindungsgemäßen Ausgestaltung kann konstruktiv einfach eine Rückstellfunktion des Freigabeelements und des weiteren Freigabeelements realisiert werden.

Des Weiteren wird vorgeschlagen, dass das Freigabeelement zumindest eine Entriegelungsaufnahmeausnehmung aufweist, die dazu vorgesehen ist, in einer Entriegelungsstellung des Freigabeelements infolge einer Betätigung des Schaltklinkenelements ein Sperrelement der Schalteinheit aufzunehmen. Vorzugsweise greift das Sperrelement in der Entriegelungsstellung des Freigabeelements infolge einer Betätigung des Schaltklinkenelements in die Entriegelungsaufnahmeausnehmung ein, um eine Bewegung des Schaltklinkenelements zu ermöglichen. Bevorzugt schlägt das Sperrelement in einer Sperrstellung des Freigabeelements zu einer Sperrung einer Bewegung des Schaltklinkenelements infolge einer Betätigung des Schaltklinkenelements an einer Sperrfläche des Freigabeelements an. Mittels der erfindungsgemäßen Ausgestaltung kann konstruktiv einfach eine Entriegelung der Bewegungssperre erreicht werden. Zudem kann konstruktiv einfach eine Sperrung einer Bewegung des Schaltklinkenelements in der Sperrstellung ermöglicht werden, indem eine Aufnahme des Sperrelements in der Entriegelungsaufnahmeausnehmung in der Sperrstellung des Freigabeelements verhindert wird.

Ferner wird vorgeschlagen, dass die erfindungsgemäße Werkzeugmaschine zumindest das Handgriffgehäuse umfasst, wobei der Betätigungsbereich des Freigabeelements nach einer Betätigung zumindest im Wesentlichen bündig mit einer Außenfläche des Handgriffgehäuses abschließt. Unter "zumindest im Wesentlichen bündig abschließen" soll hier insbesondere eine Anordnung des Betätigungsbereichs nach einer Betätigung des Freigabeelements, insbesondere nach einem Einschwenken des Freigabeelements in das Handgriffgehäuse, verstanden werden, wobei sich der Betätigungsbereich ausgehend von einem vom Handgriffgehäuse umschlossenen Raum in Richtung der Außenfläche des Handgriffgehäuses, entlang einer zumindest im Wesentlichen senkrecht zur Außenfläche des Handgriffgehäuses verlaufenden Richtung betrachtet, maximal 2 mm über die Außenfläche erstreckt und sich besonders bevorzugt maximal bis zur Außenfläche des Handgriffgehäuses erstreckt. Somit erstreckt sich der Betätigungsbereich des Freigabeelements nach einer Betätigung nicht über die Außenfläche des Handgriffgehäuses hinaus. Es kann vorteilhaft infolge eines vollständigen Eintauchens des Freigabeelements in das Handgriffgehäuse eine kompakte Anordnung des Freigabeelements in einem betätigten Zustand erreicht werden. Ferner kann einem Bediener vorteilhaft optisch signalisiert werden, dass das Freigabeelement sich in einer Entriegelungsstellung befindet.

Besonders bevorzugt umfasst die erfindungsgemäße Werkzeugmaschine zumindest das Handgriffgehäuse, wobei der Betätigungsbereich des Freigabeelements und ein Betätigungsbereich eines weiteren Freigabeelements der Schalteinheit nach einer Betätigung zumindest im Wesentlichen bündig mit einer Außenfläche des Handgriffgehäuses abschließen. Somit kann vorteilhaft ein vollständiges Eintauchen des Betätigungsbereichs des Freigabeelements und des Betätigungsbereichs des weiteren Freigabeelements in einem betätigten Zustand des Freigabeelements und/oder des weiteren Freigabeelements erreicht werden.

Des Weiteren wird vorgeschlagen, dass das Schaltklinkenelement schwenkbar, insbesondere schwenkbar relativ zum Handgriffgehäuse, um eine als Schwenkachse ausgebildete Bewegungsachse des Schaltklinkenelements gelagert ist. Es ist jedoch auch denkbar, dass das Schaltklinkenelement translatorisch beweglich entlang einer als Translationsachse ausgebildeten Bewegungsachse des Schaltklinkenelements gelagert ist. Besonders bevorzugt verläuft die Schwenkachse zumindest im Wesentlichen senkrecht zur Verbindungsebene des Handgriffgehäuses. Es kann vorteilhaft ein einfach zu bedienendes Schaltklinkenelement geschaffen werden, bei dem eine Lagerung unempfindlich gegenüber einer Verschmutzung ist. Zudem kann vorteilhaft eine Hebelwirkung zu einer komfortablen Betätigung des Schaltelements mittels des Schaltklinkenelements genutzt werden.

### Zeichnung

Weitere Vorteile ergeben sich aus der folgenden Zeichnungsbeschreibung. In der Zeichnung sind Ausführungsbeispiele der Erfindung dargestellt.

Es zeigen:
- Fig. 1: eine erfindungsgemäße Werkzeugmaschine in einer schematischen Darstellung,
- Fig. 2: eine Detailansicht eines an einem Handgriffgehäuse der erfindungsgemäßen Werkzeugmaschine angeordneten Freigabeelements einer Schalteinheit der erfindungsgemäßen Werkzeugmaschine in einem unbetätigten Zustand in einer schematischen Darstellung,
- Fig. 3: eine weitere Detailansicht des am Handgriffgehäuse angeordneten Freigabeelements in einem unbetätigten Zustand in einer schematischen Darstellung,
- Fig.4: eine weitere Detailansicht des am Handgriffgehäuse angeordneten Freigabeelements in einem unbetätigten Zustand in einer schematischen Darstellung,
- Fig. 5: eine Detailansicht des am Handgriffgehäuse angeordneten Freigabeelements in einem betätigten Zustand in einer schematischen Darstellung,
- Fig. 6: eine weitere Detailansicht des am Handgriffgehäuse angeordneten Freigabeelements in einem betätigten Zustand in einer schematischen Darstellung,
- Fig. 7: eine weitere Detailansicht des am Handgriffgehäuse angeordneten Freigabeelements in einem betätigten Zustand in einer schematischen Darstellung,
- Fig. 8: eine Detailansicht einer Bewegungsabhängigkeitseinheit der erfindungsgemäßen Werkzeugmaschine in einer schematischen Darstellung,
- Fig. 9: eine Detailansicht einer alternativen Anordnung eines Freigabeelements an einem Handgriffgehäuse einer alternativen, erfindungsgemäßen Werkzeugmaschine in einer schematischen Darstellung.
- Fig. 10: eine Detailansicht eines an einem Handgriffgehäuse einer weiteren alternativen, erfindungsgemäßen Werkzeugmaschine angeordneten Freigabeelements einer Schalteinheit der weiteren alternativen, erfindungsgemäßen Werkzeugmaschine und eine zu den Figuren 1 bis 9 alternative Anordnung eines Schaltklinkenelements der Schalteinheit am Handgriffgehäuse in einer schematischen Darstellung,
- Fig. 11: eine Detailansicht eines an einem Handgriffgehäuse einer weiteren alternativen, nicht erfindungsgemäßen Werkzeugmaschine angeordneten Freigabeelements einer Schalteinheit der weiteren alternativen, erfindungsgemäßen Werkzeugmaschine in einem unbetätigten Zustand in einer schematischen Darstellung,
- Fig. 12: eine weitere Detailansicht des Freigabeelements in einem betätigten Zustand in einer schematischen Darstellung,
- Fig. 13: eine Detailansicht einer zu den Figuren 1 bis 12 alternativen Anordnung eines Freigabeelements einer Schalteinheit einer weiteren alternativen, erfindungsgemäßen Werkzeugmaschine an einem Handgriffgehäuse der weiteren alternativen, erfindungsgemäßen Werkzeugmaschine in einer schematischen Darstellung,
- Fig. 14: eine Detailansicht einer zu den Figuren 1 bis 13 alternativen Anordnung eines Freigabeelements einer Schalteinheit einer weiteren alternativen, nicht erfindungsgemäßen Werkzeugmaschine an einem Handgriffgehäuse der weiteren alternativen, erfindungsgemäßen Werkzeugmaschine in einer schematischen Darstellung,
- Fig. 15: eine Detailansicht einer zu den Figuren 1 bis 14 alternativen Anordnung eines Freigabeelements einer Schalteinheit einer weiteren alternativen, erfindungsgemäßen Werkzeugmaschine an einem Handgriffgehäuse der weiteren alternativen, erfindungsgemäßen Werkzeugmaschine in einer schematischen Darstellung und
- Fig. 16: eine Detailansicht einer zu den Figuren 1 bis 15 alternativen Anordnung eines Freigabeelements einer Schalteinheit einer weiteren alternativen, erfindungsgemäßen Werkzeugmaschine an einem Handgriffgehäuse der weiteren alternativen, erfindungsgemäßen Werkzeugmaschine in einer schematischen Darstellung.

### Beschreibung der Ausführungsbeispiele

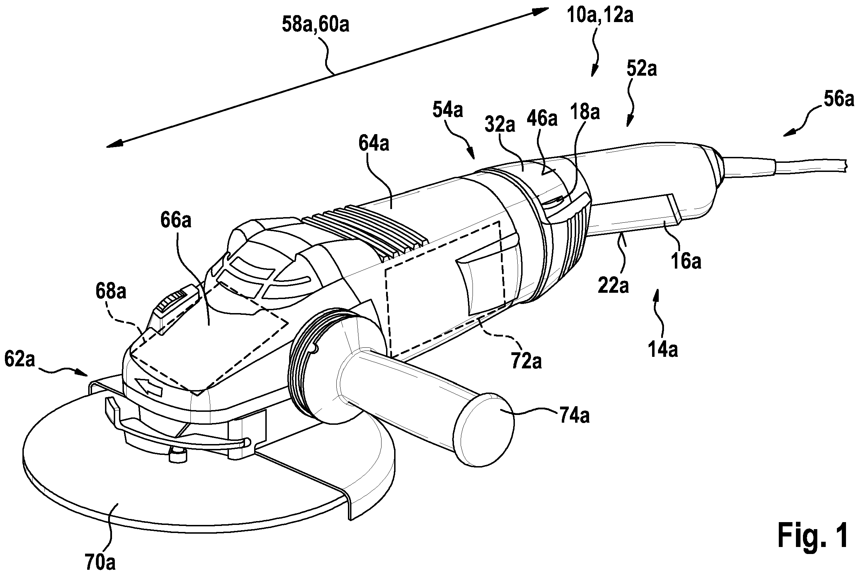

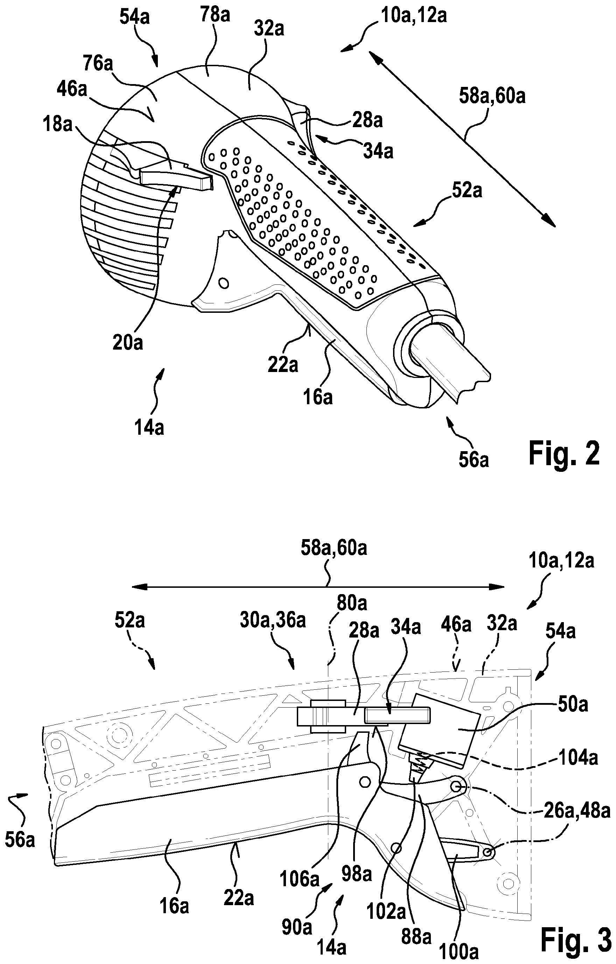

Figur 1 zeigt eine Werkzeugmaschine 10a, die von einer als Winkelschleifmaschine 12a ausgebildeten tragbaren Werkzeugmaschine 10a gebildet wird. Die tragbare Werkzeugmaschine 10a umfasst zumindest eine Schalteinheit 14a, die zumindest ein beweglich gelagertes Schaltklinkenelement 16a zu einer Betätigung eines Schaltelements 50a der Schalteinheit 14a (Figur 3) und zumindest ein Freigabeelement 18a zu einer Entriegelung einer Bewegungssperre des Schaltklinkenelements 16a aufweist. Hierbei weist die tragbare Werkzeugmaschine 10a zumindest eine Werkzeugmaschinenschaltvorrichtung auf, die zumindest die Schalteinheit 14a und zumindest eine Lagereinheit 90a zu einer beweglichen Lagerung des Schaltklinkenelements 16a der Schalteinheit 14a umfasst. Das Freigabeelement 18a umfasst zumindest einen Betätigungsbereich 20a, der zumindest teilweise seitlich neben einer Bedienfläche 22a des Schaltklinkenelements 16a angeordnet ist. Das Freigabeelement 18a ist hierbei an einem Handgriffgehäuse 32a der tragbaren Werkzeugmaschine 10a angeordnet. Das Handgriffgehäuse 32a umfasst einen stielförmigen Griffbereich 52a, an dem das Schaltklinkenelement 16a angeordnet ist. Der stielförmige Griffbereich 52a des Handgriffgehäuses 32a bildet einen Haupthandgriff der tragbaren Werkzeugmaschine 10a. Hierbei erstreckt sich der von dem stielförmigen Griffbereich 52a gebildete Haupthandgriff zumindest im Wesentlichen ausgehend von einem Anbindungsbereich 54a des Handgriffgehäuses 32a in eine vom Anbindungsbereich 54a abgewandte Richtung bis zu einer Seite 56a des Handgriffgehäuses 32a, an der ein Kabel der als Winkelschleifmaschine 12a ausgebildeten tragbaren Werkzeugmaschine 10a zur Energieversorgung angeordnet ist. Der stielförmige Griffbereich 52a des Handgriffgehäuses 32a ist um einen Winkel kleiner als 30° relativ zu einer Haupterstreckungsrichtung 58a des Handgriffgehäuses 32a bzw. zu einer Haupterstreckungsrichtung 60a der tragbaren Werkzeugmaschine 10a geneigt angeordnet.

Die als Winkelschleifmaschine 12a ausgebildete tragbare Werkzeugmaschine 10a umfasst ferner eine Schutzhaubeneinheit 62a, ein Antriebsgehäuse 64a und ein Abtriebsgehäuse 66a. Aus dem Abtriebsgehäuse 66a heraus erstreckt sich eine als Spindel (hier nicht näher dargestellt) ausgebildete Ausgangswelle einer Abtriebseinheit 68a der tragbaren Werkzeugmaschine 10a, an der ein Bearbeitungswerkzeug 70a zu einer Bearbeitung eines Werkstücks (hier nicht näher dargestellt) fixiert werden kann. Das Bearbeitungswerkzeug 70a ist als Schleifscheibe ausgebildet. Es ist jedoch auch denkbar, dass das Bearbeitungswerkzeug 70a als Trenn- oder Polierscheibe ausgebildet ist. Die tragbare Werkzeugmaschine 10a umfasst das Antriebsgehäuse 64a zur Aufnahme einer Antriebseinheit 72a der tragbaren Werkzeugmaschine 10a und das Abtriebsgehäuse 66a zu einer Aufnahme der Abtriebseinheit 68a. Die Antriebseinheit 72 ist dazu vorgesehen, das Bearbeitungswerkzeug 70a über die Abtriebseinheit 68a rotierend anzutreiben. Das Bearbeitungswerkzeug 70a kann hierbei mittels eines Befestigungselements (hier nicht näher dargestellt) zur Bearbeitung eines Werkstücks drehfest mit der Spindel verbunden werden. Somit kann das Bearbeitungswerkzeug 70a in einem Betrieb der tragbaren Werkzeugmaschine 10a rotierend angetrieben werden. Die Abtriebseinheit 68a ist über ein als Ritzel ausgebildetes und rotierend antreibbares Antriebselement (hier nicht näher dargestellt) der Antriebseinheit 72a auf eine, einem Fachmann bereits bekannte Art und Weise mit der Antriebseinheit 72a verbunden. Zudem ist an dem Abtriebsgehäuse 66a ein Zusatzhandgriff 74a angeordnet. Der Zusatzhandgriff 74a erstreckt sich in einem am Abtriebsgehäuse 66a montierten Zustand quer zur Haupterstreckungsrichtung 60a der tragbaren Werkzeugmaschine 10a.

Figur 2 zeigt eine Detailansicht des am Handgriffgehäuse 32a angeordneten Freigabeelements 18a der Schalteinheit 14a in einem unbetätigten Zustand des Freigabeelements 18a. Das Freigabeelement 18a ist in einem Bereich eines dem Anbindungsbereich 54a zugewandten Endes des Handgriffgehäuses 32a am Handgriffgehäuse 32a angeordnet. Zudem ist das Freigabeelement 18a zumindest teilweise außerhalb des stielförmigen Griffbereichs 52a angeordnet. Hierbei ist zumindest der Betätigungsbereich 20a des Freigabeelements 18a größtenteils außerhalb des stielförmigen Griffbereichs 52a angeordnet. Das Freigabeelement 18a ist schwenkbar um zumindest eine Freigabebewegungsachse 24a gelagert. Die Freigabebewegungsachse 24a ist somit als Freigabeschwenkachse ausgebildet. Das Freigabeelement 18a weist zumindest die Freigabebewegungsachse 24a auf, die in einer sich zumindest im Wesentlichen senkrecht zu einer Bewegungsachse 26a des Schaltklinkenelements 16a erstreckenden Ebene verläuft. Das Schaltklinkenelement 16a ist hierbei schwenkbar um die als Schwenkachse 48a ausgebildete Bewegungsachse 26a des Schaltklinkenelements 16a gelagert. Die als Schwenkachse 48a ausgebildete Bewegungsachse 26a verläuft zumindest im Wesentlichen senkrecht zu einer Verbindungsebene des Handgriffgehäuses 32a, in der zwei Handgriffgehäuseschalenelemente 76a, 78a des Handgriffgehäuses 32a miteinander verbunden sind. Somit verläuft die Freigabebewegungsachse 24a zumindest im Wesentlichen parallel zur Verbindungsebene des Handgriffgehäuses 32a. Ferner verläuft die Freigabebewegungsachse 24a zumindest im Wesentlichen quer zu der als Schwenkachse 48a ausgebildeten Bewegungsachse 26a des Schaltklinkenelements 16a.

Des Weiteren weist die Schalteinheit 14a zumindest ein weiteres Freigabeelement 28a auf. Das weitere Freigabeelement 28a ist ebenfalls im Bereich des dem Anbindungsbereich 54a zugewandten Endes des Handgriffgehäuses 32a am Handgriffgehäuse 32a angeordnet (Figuren 2 und 3). Zudem ist das weitere Freigabeelement 28a ebenfalls zumindest teilweise außerhalb des stielförmigen Griffbereichs 52a angeordnet. Hierbei ist zumindest ein Betätigungsbereich 34a des weiteren Freigabeelements 28a größtenteils außerhalb des stielförmigen Griffbereichs 52a angeordnet. Das weitere Freigabeelement 28a ist spiegelsymmetrisch zum Freigabeelement 18a angeordnet. Somit weist das weitere Freigabeelement 28a zumindest den Betätigungsbereich 34a auf, der, bezogen auf eine sich zumindest im Wesentlichen senkrecht zur Bewegungsachse 26a des Schaltklinkenelements 16a erstreckende Ebene, spiegelsymmetrisch zum Betätigungsbereich 20a des Freigabeelements18a zumindest teilweise seitlich neben der Bedienfläche 22a des Schaltklinkenelements 16a angeordnet ist. Das weitere Freigabeelement 28a ist schwenkbar um zumindest eine weitere Freigabebewegungsachse 80a gelagert. Die weitere Freigabebewegungsachse 80a ist als Freigabeschwenkachse ausgebildet. Die weitere Freigabebewegungsachse 80a verläuft hierbei in einer sich zumindest im Wesentlichen senkrecht zu der als Schwenkachse 48a ausgebildeten Bewegungsachse 26a des Schaltklinkenelements 16a erstreckenden Ebene. Somit verläuft die weitere Freigabebewegungsachse 80a zumindest im Wesentlichen parallel zur Verbindungsebene des Handgriffgehäuses 32a. Ferner verläuft die weitere Freigabebewegungsachse 80a zumindest im Wesentlichen quer zu der als Schwenkachse 48a ausgebildeten Bewegungsachse 26a des Schaltklinkenelements 16a. Die weitere Freigabebewegungsachse 80a verläuft zumindest im Wesentlichen parallel zur Freigabebewegungsachse 24a des Freigabeelements 18a. Das Freigabeelement 18a und das weitere Freigabeelement 28a sind relativ beweglich zueinander gelagert.

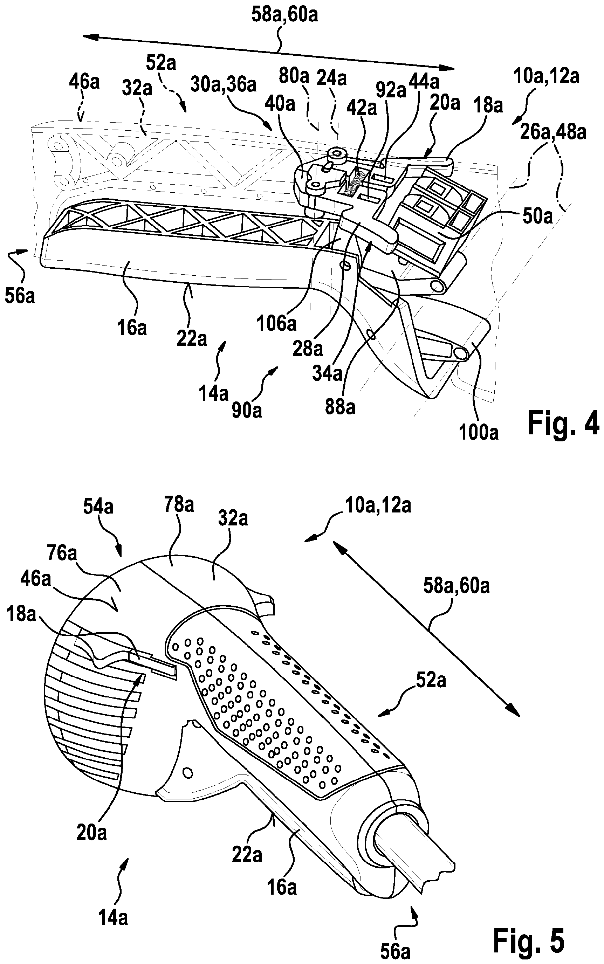

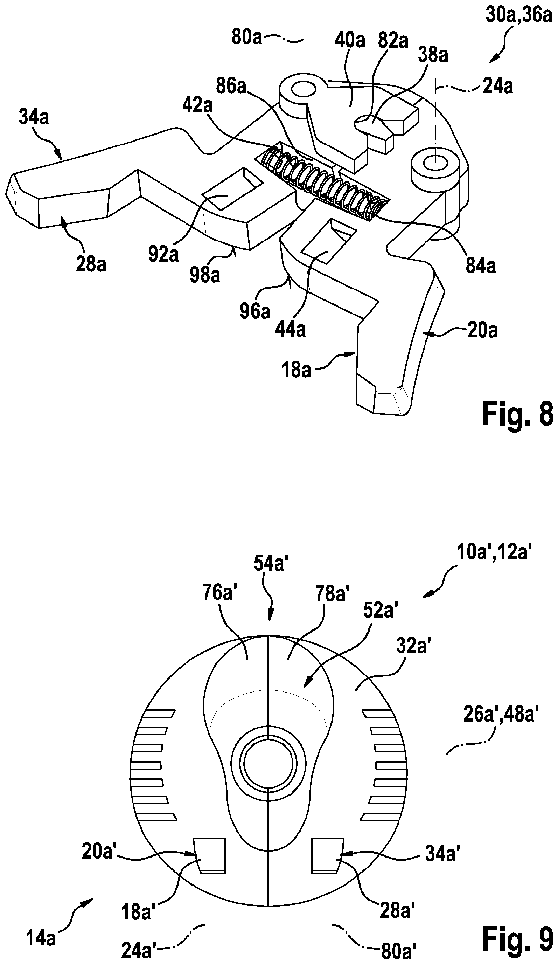

Ferner weist die tragbare Werkzeugmaschine 10a zumindest eine Bewegungsabhängigkeitseinheit 30a auf, die das Freigabeelement 18a und das weitere Freigabeelement 28a zumindest in einem montierten Zustand bewegungstechnisch miteinander koppelt (Figur 4). Die Bewegungsabhängigkeitseinheit 30a, ist dazu vorgesehen, infolge einer Betätigung des Freigabeelements 18a oder des weiteren Freigabeelements 28a das Freigabeelement 18a und das weitere Freigabeelement 28a in entgegengesetzt gerichtete Richtungen zu bewegen. Somit werden das Freigabeelement 18a und das weitere Freigabeelement 28a mittels der Bewegungsabhängigkeitseinheit 30a infolge einer Betätigung des Freigabeelements 18a oder des weiteren Freigabeelements 28a stets gemeinsam bewegt. Hierbei werden das Freigabeelement 18a und das weitere Freigabeelement 28a infolge einer Betätigung des Freigabeelements 18a oder des weiteren Freigabeelements 28a in eine dem Handgriffgehäuse 32a zugewandte Richtung mittels der Bewegungsabhängigkeitseinheit 30a in eine dem Handgriffgehäuse 32a zugewandte Richtung bewegt. Die Bewegungsabhängigkeitseinheit 30a ist als Gelenkeinheit 36a ausgebildet. Die als Gelenkeinheit 36a ausgebildete Bewegungsabhängigkeitseinheit 30a weist zumindest ein Gelenkelement 38a auf, das einstückig mit dem Freigabeelement 18a oder dem weiteren Freigabeelement 28a ausgebildet ist. Das Gelenkelement 38a ist hierbei einstückig mit dem Freigabeelement 18a ausgebildet (Figuren 4 und 8). Ferner weist die als Gelenkeinheit 36a ausgebildete Bewegungsabhängigkeitseinheit 30a ein weiteres Gelenkelement 40a auf, das einstückig mit dem weiteren Freigabeelement 28a ausgebildet ist. Das Gelenkelement 38a und das weitere Gelenkelement 40a sind dazu vorgesehen, mittels eines Zusammenwirkens das Freigabeelement 18a und das weitere Freigabeelement 28a abhängig voneinander zu bewegen. Das weitere Gelenkelement 40a umfasst eine Eingriffausnehmung 82a, die eine zumindest im Wesentlichen U-förmige Ausgestaltung aufweist. Das Gelenkelement 38a greift hierbei in einem montierten Zustand in die Eingriffausnehmung 82a ein. Das Gelenkelement 38a weist hierbei eine tropfenförmige Ausgestaltung auf, dessen kreisscheibenförmiger Teilbereich in einem montierten Zustand des Freigabeelements 18a und des weiteren Freigabeelements 28a in der Eingriffausnehmung 82a angeordnet ist.

Infolge einer Betätigung des Freigabeelements 18a oder des weiteren Freigabeelements 28a werden Kräfte mittels eines Zusammenwirkens des Gelenkelements 38a und des weiteren Gelenkelements 40a über Flankenbereiche des Gelenkelements 38a und des weiteren Gelenkelements 40a zwischen dem Freigabeelement 18a und dem weiteren Freigabeelement 28a übertragen, die eine voneinander abhängige Bewegung des Freigabeelements 18a und des weiteren Freigabeelements 28a hervorrufen. Die Flankenbereiche des weiteren Gelenkelements 40a werden hierbei von abgewinkelten Schenkelbereichen der Eingriffausnehmung 82a gebildet. Die Flankenbereiche des Gelenkelements 38a werden von Seitenwänden des Gelenkelements 38a gebildet. Eine Ausgestaltung der Bewegungsabhängigkeitseinheit 30a als Verzahnungsbewegungsabhängigkeitseinheit ist ebenfalls denkbar, wobei Kräfte zu einer abhängigen Bewegung des Freigabeelements 18a und des weiteren Freigabeelements 28a über Zahnflanken von Zähnen einer Verzahnung der Verzahnungsbewegungsabhängigkeitseinheit übertragen werden können. Hierbei ist jeweils ein Verzahnungselement einstückig mit dem Freigabeelement 18a und mit dem weiteren Freigabeelement 28a ausgebildet.

Des Weiteren weist die Schalteinheit 14a zumindest ein Federelement 42a auf, das dazu vorgesehen ist, zumindest das Freigabeelement 18a mit einer Federkraft in Richtung einer Verriegelungsstellung des Freigabeelements 18a zu beaufschlagen (Figur 8). Das Federelement 42a ist als Druckfeder ausgebildet. Hierbei stützt sich das Federelement 42a mit einem Ende an dem Freigabeelement 18a ab und mit einem weiteren Ende stützt sich das Federelement 42a an dem weiteren Freigabeelement 28a der Schalteinheit 14a ab. Das Freigabeelement 18a und das weitere Freigabeelement 28a umfassen jeweils eine Federaufnahmeausnehmung 84a, 86a, in der das Federelement 42a in einem montierten Zustand angeordnet ist. Die Federaufnahmeausnehmungen 84a, 86a sind als halbzylinderförmige Aufnahmemulden ausgebildet. Es ist jedoch auch denkbar, dass die Federaufnahmeausnehmungen 84a, 86a eine andere, einem Fachmann als sinnvoll erscheinende Ausgestaltung aufweisen.

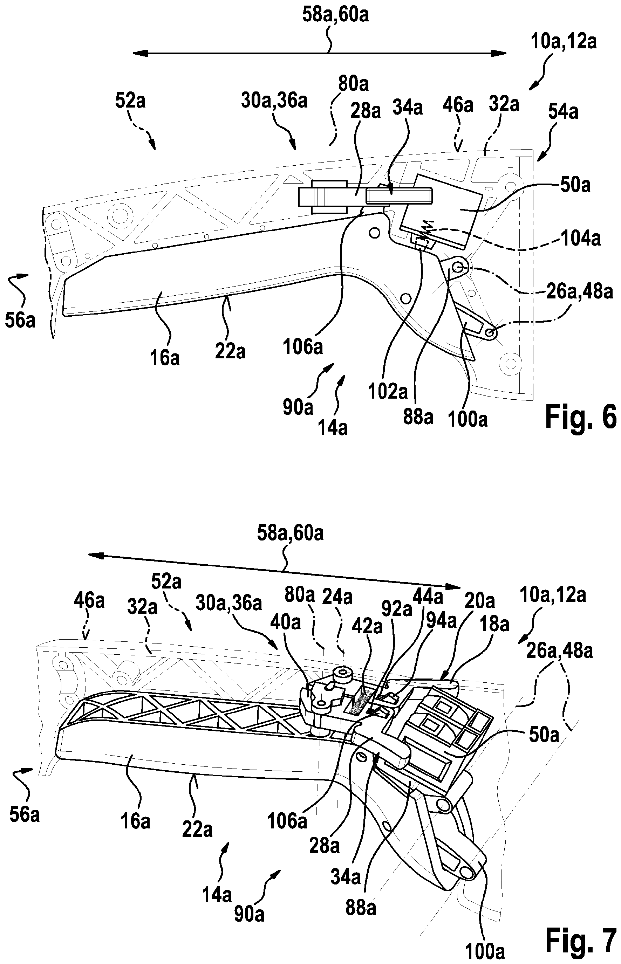

Ferner weist das Freigabeelement 18a zumindest eine Entriegelungsaufnahmeausnehmung 44a auf, die dazu vorgesehen ist, in einer Entriegelungsstellung des Freigabeelements 18a infolge einer Betätigung des Schaltklinkenelements 16a ein Sperrelement 94a der Schalteinheit 14a aufzunehmen (Figur 6). Das Sperrelement 94a ist an einem Hebellagerelement 88a der Lagereinheit 90a der tragbaren Werkzeugmaschine 10a angeordnet. Hierbei ist das Sperrelement 94a einstückig mit dem Hebellagerelement 88a ausgebildet. Das weitere Freigabeelement 28a umfasst ebenfalls zumindest eine Entriegelungsaufnahmeausnehmung 92a, die dazu vorgesehen ist, in einer Entriegelungsstellung des weiteren Freigabeelements 28a infolge einer Betätigung des Schaltklinkenelements 16a ein weiteres Sperrelement 106a der Schalteinheit 14a aufzunehmen (Figur 7). Das weitere Sperrelement 106a ist ebenfalls an dem Hebellagerelement 88a angeordnet. Hierbei ist das weitere Sperrelement 106a ebenfalls einstückig mit dem Hebellagerelement 88a ausgebildet. Das Sperrelement 94a schlägt in einer Verriegelungsstellung des Freigabeelements 18a, in der eine Bewegung des Schaltklinkenelements 16a weitestgehend mittels der Bewegungssperre verhindert wird, infolge einer Betätigung des Schaltklinkenelements 16a an einer Sperrfläche 96a des Freigabeelements 18a an. Die Sperrfläche 96a ist an einer dem Schaltklinkenelement 16a zugewandten Seite des Freigabeelements 18a angeordnet. Hierbei ist die Sperrfläche 96a seitlich neben der Entriegelungsaufnahmeausnehmung 44a des Freigabeelements 18a angeordnet (Figur 8). Ferner schlägt das weitere Sperrelement 106a in einer Verriegelungsstellung des weiteren Freigabeelements 28a, in der eine Bewegung des Schaltklinkenelements 16a weitestgehend mittels der Bewegungssperre verhindert wird, infolge einer Betätigung des Schaltklinkenelements 16a an einer weiteren Sperrfläche 98a des weiteren Freigabeelements 28a an. Die weitere Sperrfläche 98a ist an einer dem Schaltklinkenelement 16a zugewandten Seite des weiteren Freigabeelements 28a angeordnet. Hierbei ist die weitere Sperrfläche 98a seitlich neben der Entriegelungsaufnahmeausnehmung 92a des weiteren Freigabeelements 28a angeordnet (Figur 8).

Der Betätigungsbereich 20a des Freigabeelements 18a und der Betätigungsbereich 34a des weiteren Freigabeelements 28a erstrecken sich in einem unbetätigten Zustand des Freigabeelements 18a und des weiteren Freigabeelements 28a, entlang einer zumindest im Wesentlichen senkrecht zu einer Außenfläche 46a des Handgriffgehäuses 32a verlaufenden Richtung betrachtet, um mehr als 2 mm über die Außenfläche 46a hinaus. Der Betätigungsbereich 20a des Freigabeelements 18a schließt nach einer Betätigung zumindest im Wesentlichen bündig mit der Außenfläche 46a des Handgriffgehäuses 32a ab (Figur 5). Der Betätigungsbereich 34a des weiteren Freigabeelements 28a der Schalteinheit 14a schließt nach einer Betätigung ebenfalls zumindest im Wesentlichen bündig mit der Außenfläche 46a des Handgriffgehäuses 32a ab. Das Freigabeelement 18a und das weitere Freigabeelement 28a sind, entlang einer Hauptbewegungsrichtung des Schaltklinkenelements 16a betrachtet, auf einem dem Schaltklinkenelement 16a abgewandten Bereich des Handgriffgehäuses 32a angeordnet. Hierdurch kann ein Bediener den Betätigungsbereich 20a des Freigabeelements 18a oder den Betätigungsbereich 34a des weiteren Freigabeelements 28a mittels eines Zeigefingers oder mittels eines Daumens einer Hand des Bediener betätigen. Somit sind das Freigabeelement 18a und das weitere Freigabeelement 28a, entlang der Hauptbewegungsrichtung des Schaltklinkenelements 16a in Richtung des Handgriffgehäuses 32a betrachtet, oberhalb des Schaltklinkenelements 16a bzw. nach dem Schaltklinkenelement 16a angeordnet. In einer in Figur 9 dargestellten, alternativen Anordnung des Freigabeelements 18a' und des weiteren Freigabeelements 28a' sind das Freigabeelement 18a' und das weitere Freigabeelement 28a', entlang der Hauptbewegungsrichtung des Schaltklinkenelements 16a' ausgehend von dem Schaltklinkenelement 16a' in eine vom Handgriffgehäuse 32a' abgewandte Richtung betrachtet, unterhalb des Schaltklinkenelements 16a' bzw. nach dem Schaltklinkenelement 16a' angeordnet.

Des Weiteren weist die tragbare Werkzeugmaschine 10a zumindest die Lagereinheit 90a auf, die dazu vorgesehen ist, das Schaltklinkenelement 16a zumindest beweglich relativ zum Handgriffgehäuse 32a zu lagern. Die Lagereinheit 90a ist infolge einer Betätigung des Schaltklinkenelements 16a dazu vorgesehen, ausgehend von einem dem Anbindungsbereich 54a des Handgriffgehäuses 32a zugewandten Ende des Schaltklinkenelements 16a in Richtung eines weiteren, dem Anbindungsbereich 54a abgewandten, greifbaren Endes des Schaltklinkenelements 16a, stets eine Hubbewegung des Schaltklinkenelements 16a entlang einer Strecke mit einem Wert größer als Null zu gewährleisten. Die Lagereinheit 90a weist zumindest das Hebellagerelement 88a auf, das dazu vorgesehen ist, in Abhängigkeit einer Bewegung des Schaltklinkenelements 16a ein Schaltstößelelement 102a des Schaltelements 50a der Schalteinheit 14a zu betätigen (Figuren 3, 4 und 5). Das Hebellagerelement 88a ist an dem dem Anbindungsbereich 54a des Handgriffgehäuses 32a zugewandten Ende des Schaltklinkenelements 16a beweglich mit dem Schaltklinkenelement 16a verbunden. Ferner weist die Lagereinheit 90a zumindest ein weiteres Hebellagerelement 100a auf, das beweglich an dem Schaltklinkenelement 16a und beweglich an einem der Handgriffgehäuseschalenelemente 76a, 78a des Handgriffgehäuses 32a angeordnet ist. Das Hebellagerelement 88a und das weitere Hebellagerelement 100a sind zumindest im Wesentlichen parallel zueinander ausgerichtet. Infolge der zumindest im Wesentlichen parallelen Anordnung des Hebellagerelements 88a und des weiteren Hebellagerelements 100a wird eine Parallelführung des Schaltklinkenelements 16a infolge einer Betätigung des Schaltklinkenelements 16a realisiert. Das weitere, dem Anbindungsbereich 54a abgewandte, greifbare Ende des Schaltklinkenelements 16a ist hierbei entkoppelt von einer Anordnung von Lagerpunkten der Lagereinheit 90a.

Des Weiteren weist die Schalteinheit 14a zumindest ein weiteres Federelement 104a auf, das dazu vorgesehen ist, das Schaltklinkenelement 16a, mit einer Federkraft des weiteren Federelements 104a in Richtung einer Ausgangsstellung des Schaltklinkenelements 16a zu beaufschlagen. Das weitere Federelement 104a ist zu einer Bildung einer Totmannschaltungsfunktion der Schalteinheit 14a vorgesehen. Das weitere Federelement 104a ist dazu vorgesehen, infolge einer Einwirkung einer Federkraft auf das Schaltklinkenelement 16a eine Bewegung des Schaltklinkenelements 16a nach einer Aufhebung einer Einwirkung einer Betätigungskraft eines Bedieners auf das Schaltklinkenelement 16a in eine vom Handgriffgehäuse 32a abgewandte Richtung in eine Ausgangstellung des Schaltklinkenelements 16a zu ermöglichen. Hierbei wird das weitere Federelement 104a von einem das Schaltstößelelement 102a des Schaltelements 50a mit einer Federkraft beaufschlagenden Federelement des Schaltelements 50a gebildet. Somit übt das weitere Federelement 104a über das Hebellagerelement 88a, das infolge einer Bewegung des Schaltklinkenelements 16a in Richtung des Handgriffgehäuses 32a das Schaltstößelelement 102a des Schaltelements 50a betätigt, eine Federkraft auf das Schaltklinkenelement 16a aus. Hierdurch wird das Schaltklinkenelement 16a nach einer Aufhebung einer Einwirkung einer Betätigungskraft eines Bedieners in die vom Handgriffgehäuse 32a abgewandte Richtung bewegt. Eine Ausrichtung der Bedienfläche 22a des Schaltklinkenelements 16a relativ zum Handgriffgehäuse 32a wird mittels der Lagereinheit 90a infolge einer Bewegung des Schaltklinkenelements 16a relativ zum Handgriffgehäuse 32a zumindest im Wesentlichen beibehalten. Es wird somit mittels der Lagereinheit 90a eine gleichmäßige Hubbewegung über die gesamte Bedienfläche 22a des Schaltklinkenelements 16a in Richtung des Handgriffgehäuses 32a infolge einer Betätigung des Schaltklinkenelements 16a erreicht.

Zu einer Inbetriebnahme der tragbaren Werkzeugmaschine 10a betätigt ein Bediener das Freigabeelement 18a oder das weitere Freigabeelement 28a ausgehend von der Verriegelungsstellung des Freigabeelements 18a und des weiteren Freigabeelements 28a, um die Bewegungssperre des Schaltklinkenelements 16a zu entriegeln (Figuren 2 bis 4). Infolge der Betätigung des Freigabeelements 18a oder des weiteren Freigabeelements 28a schwenken das Freigabeelement 18a und das weitere Freigabeelement 28a mittels der Bewegungsabhängigkeitseinheit 30a um die Freigabebewegungsachse 24a bzw. um die weitere Freigabebewegungsachse 80a in das Handgriffgehäuse 32a ein, bis der Betätigungsbereich 20a des Freigabeelements 18a und der Betätigungsbereich 34a des weiteren Freigabeelements 28a zumindest im Wesentlichen bündig mit der Außenfläche 46a des Handgriffgehäuses 32a abschließen (Figur 5). Das Freigabeelement 18a und das weitere Freigabeelement 28a befinden sich somit in der Entriegelungsstellung (Figuren 6 und 7). Das Freigabeelement 18a und das weitere Freigabeelement 28a werden von dem Bediener in der Entriegelungsstellung gehalten, bis das Sperrelement 94a und das weitere Sperrelement 106a infolge einer Bewegung des Schaltklinkenelements 16a in Richtung des Handgriffgehäuses 32a in die Entriegelungsaufnahmeausnehmungen 44a, 92a des Freigabeelements 18a und des weiteren Freigabeelements 28a eingetaucht sind (Figuren 6 und 7). Der Bediener muss nun lediglich eine Kraft aufbringen, die das Schaltklinkenelement 16a in einer Einschaltposition hält. Mittels einer Bewegung des Schaltklinkenelements 16a in Richtung des Handgriffgehäuses 32a in der Entriegelungsstellung des Freigabeelements 18a und des weiteren Freigabeelements 28a wird zudem mittels des Hebellagerelements 88a das Schaltstößelelement 102a des Schaltelements 50a betätigt (Figur 6).

Das Freigabeelement 18a und das weitere Freigabeelement 28a werden mittels des Eingreifens des Sperrelements 94a und des weiteren Sperrelements 106a in die Entriegelungsaufnahmeausnehmungen 44a, 92a in der Entriegelungsstellung gehalten, bis eine Krafteinwirkung des Bedieners auf das Schaltklinkenelement 16a aufgehoben wird und das Schaltklinkenelement 16a infolge einer Federkraft des weiteren Federelements 104a in eine Ausgangsstellung bewegt wird. Hierdurch werden das Sperrelement 94a und das weitere Sperrelement 106a aus den Entriegelungsaufnahmeausnehmungen 44a, 92a herausbewegt. Das Freigabeelement 18a und das weitere Freigabeelement 28a werden mittels einer Federkraft des Federelements 42a in die Verriegelungsstellung bewegt. Somit ist nach einer Aufhebung einer Krafteinwirkung des Bedieners auf das Schaltklinkenelement 16a die Bewegungssperre des Schaltklinkenelements 16a nach einer Bewegung des Schaltklinkenelements 16a in eine Ausgangsstellung und einer Bewegung des Freigabeelements 18a und des weiteren Freigabeelements 28a in eine Verriegelungsstellung aktiv.

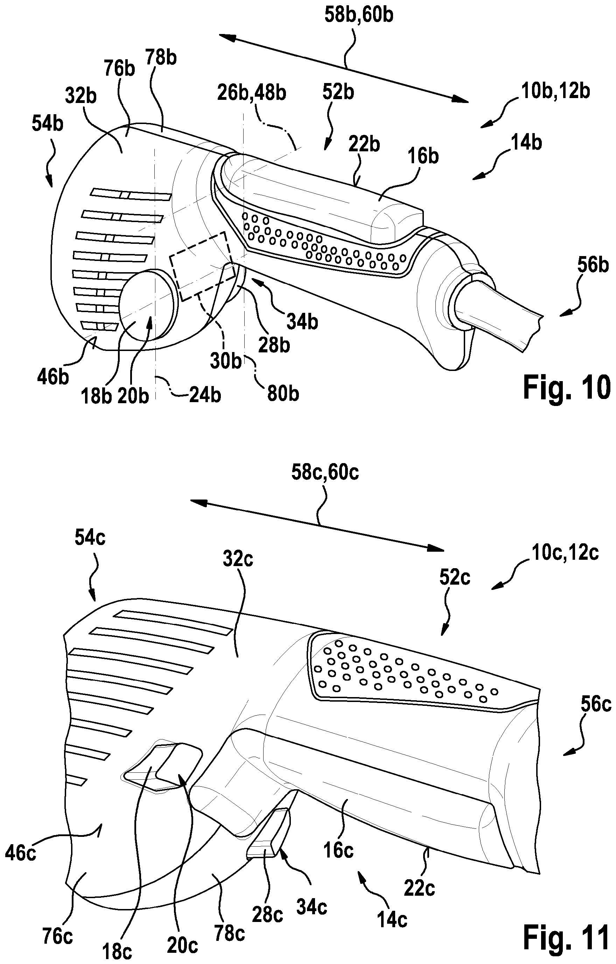

In Figuren 10 bis 16 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und h hinzugefügt. Die nachfolgende Beschreibung beschränkt sich im Wesentlichen auf die Unterschiede zu dem ersten Ausführungsbeispiel in den Figuren 1 bis 9, wobei bezüglich gleichbleibender Bauteile, Merkmale und Funktionen auf die Beschreibung des ersten Ausführungsbeispiels in den Figuren 1 bis 9 verwiesen werden kann.

Figur 10 zeigt eine Detailansicht eines an einem Handgriffgehäuse 32b einer alternativen, als tragbare Werkzeugmaschine 10b ausgebildeten Werkzeugmaschine 10b angeordneten Freigabeelements 18b einer Schalteinheit 14b der tragbaren Werkzeugmaschine 10b in einem unbetätigten Zustand des Freigabeelements 18b. Die Werkzeugmaschine 10b weist einen zumindest im Wesentlichen analogen Aufbau zur Werkzeugmaschine 10a aus Figur 1 auf. Somit kann bezüglich einer Beschreibung bzw. Merkmalen der Werkzeugmaschine 10b des weiteren Ausführungsbeispiels zumindest im Wesentlichen auf die Beschreibung der Figur 1 verwiesen werden. Die Werkzeugmaschine 10b umfasst zumindest eine Schalteinheit 14b, die zumindest ein beweglich gelagertes Schaltklinkenelement 16b und zumindest ein Freigabeelement 18b zu einer Entriegelung einer Bewegungssperre des Schaltklinkenelements 16b aufweist. Das Freigabeelement 18b umfasst zumindest einen Betätigungsbereich 20b des Freigabeelements 18b, der zumindest teilweise seitlich neben einer Bedienfläche 22b des Schaltklinkenelements 16b angeordnet ist. Das Freigabeelement 18b ist in einem Bereich eines einem Anbindungsbereich 54b des Handgriffgehäuses 32b zugewandten Endes des Handgriffgehäuses 32b am Handgriffgehäuse 32b angeordnet. Zudem ist das Freigabeelement 18b vollständig außerhalb eines stielförmigen Griffbereichs 52b des Handgriffgehäuses 32b angeordnet.

Das Freigabeelement 18b ist schwenkbar um zumindest eine Freigabebewegungsachse 24b gelagert. Die Freigabebewegungsachse 24b ist somit als Freigabeschwenkachse ausgebildet. Das Freigabeelement 18b weist zumindest die Freigabebewegungsachse 24b auf, die in einer sich zumindest im Wesentlichen senkrecht zu einer Bewegungsachse 26b des Schaltklinkenelements 16b erstreckenden Ebene verläuft. Das Schaltklinkenelement 16b ist hierbei schwenkbar um eine als Schwenkachse 48b ausgebildete Bewegungsachse 26b des Schaltklinkenelements 16b gelagert. Die als Schwenkachse 48b ausgebildete Bewegungsachse 26b verläuft zumindest im Wesentlichen senkrecht zu einer Verbindungsebene des Handgriffgehäuses 32b, in der zwei Handgriffgehäuseschalenelemente 76b, 78b des Handgriffgehäuses 32b miteinander verbunden sind. Somit verläuft die Freigabebewegungsachse 24b zumindest im Wesentlichen parallel zur Verbindungsebene des Handgriffgehäuses 32b. Ferner verläuft die Freigabebewegungsachse 24b zumindest im Wesentlichen quer zu einer als Schwenkachse 48b ausgebildeten Bewegungsachse 26b des Schaltklinkenelements 16b. Hierbei ist das Schaltklinkenelement 16b mittels einer Lagereinheit 90b der tragbaren Werkzeugmaschine 10b an einem dem Anbindungsbereich 54b zugewandten Ende des Schaltklinkenelements 16b schwenkbar gelagert. Es ist jedoch auch denkbar, dass das Schaltklinkenelement 16b an einem dem Anbindungsbereich 54b abgewandten Ende des Schaltklinkenelements 16b mittels der Lagereinheit 90b schwenkbar gelagert ist oder translatorisch mittels der Lagereinheit 90b gelagert ist. Das Schaltklinkenelement 16b ist an einer Seite des Handgriffgehäuses 32b angeordnet, die bei einem Umgreifen des Handgriffgehäuses 32b zu einer ordnungsgemäßen Handhabung der tragbaren Werkzeugmaschine 10b einer Handinnenfläche einer Hand eines Bedieners (hier nicht näher dargestellt) zugewandt ist. Das Schaltklinkenelement 16b ist in jedem Betriebszustand an einer Seite des Handgriffgehäuses 32b angeordnet, die verschieden ist von einer weiteren Seite des Handgriffgehäuses 32b, die einer Abtriebsseite eines Abtriebsgehäuses (hier nicht näher dargestellt) zugewandt ist, aus der sich eine Spindel zu einem Antrieb bzw. zu einem Koppeln eines Bearbeitungswerkzeugs (hier nicht näher dargestellt) heraus erstreckt.

Des Weiteren weist die Schalteinheit 14b zumindest ein weiteres Freigabeelement 28b auf. Das weitere Freigabeelement 28b ist ebenfalls im Bereich des dem Anbindungsbereich 54b zugewandten Endes des Handgriffgehäuses 32b am Handgriffgehäuse 32b angeordnet. Zudem ist das weitere Freigabeelement 28b ebenfalls vollständig außerhalb des stielförmigen Griffbereichs 52b am Handgriffgehäuse 32b angeordnet. Das weitere Freigabeelement 28b ist spiegelsymmetrisch zum Freigabeelement 18b angeordnet (Figur 4). Somit weist das weitere Freigabeelement 28b zumindest einen Betätigungsbereich 34b auf, der, bezogen auf eine sich zumindest im Wesentlichen senkrecht zur Bewegungsachse 26b des Schaltklinkenelements 16b erstreckende Ebene, spiegelsymmetrisch zum Betätigungsbereich 20b des Freigabeelements18b zumindest teilweise seitlich neben der Bedienfläche 22b des Schaltklinkenelements 16b angeordnet ist. Hierbei sind das Freigabeelement 18b und das weitere Freigabeelement 28b mittels einer Bewegungsabhängigkeitseinheit 30b der tragbaren Werkzeugmaschine 10b bewegungstechnisch miteinander gekoppelt.

Figur 11 zeigt eine Detailansicht eines an einem Handgriffgehäuse 32c einer alternativen, nicht erfindungsgemäßen, als tragbare Werkzeugmaschine 10c ausgebildeten Werkzeugmaschine 10c angeordneten Freigabeelements 18c einer Schalteinheit 14c der tragbaren Werkzeugmaschine 10c in einem unbetätigten Zustand des Freigabeelements 18c. Die Werkzeugmaschine 10c weist einen zumindest im Wesentlichen analogen Aufbau zur Werkzeugmaschine 10a aus Figur 1 auf. Somit kann bezüglich einer Beschreibung bzw. Merkmalen der Werkzeugmaschine 10c des weiteren Ausführungsbeispiels zumindest im Wesentlichen auf die Beschreibung der Figur 1 verwiesen werden. Die Werkzeugmaschine 10c umfasst zumindest eine Schalteinheit 14c, die zumindest ein beweglich gelagertes Schaltklinkenelement 16c und zumindest ein Freigabeelement 18c zu einer Entriegelung einer Bewegungssperre des Schaltklinkenelements 16c aufweist. Das Freigabeelement 18c umfasst zumindest einen Betätigungsbereich 20c des Freigabeelements 18c, der zumindest teilweise seitlich neben einer Bedienfläche 22c des Schaltklinkenelements 16c angeordnet ist. Das Freigabeelement 18c ist in einem Bereich eines einem Anbindungsbereich 54c des Handgriffgehäuses 32c zugewandten Endes des Handgriffgehäuses 32c am Handgriffgehäuse 32c angeordnet. Zudem ist das Freigabeelement 18c vollständig außerhalb eines stielförmigen Griffbereichs 52c des Handgriffgehäuses 32c angeordnet.

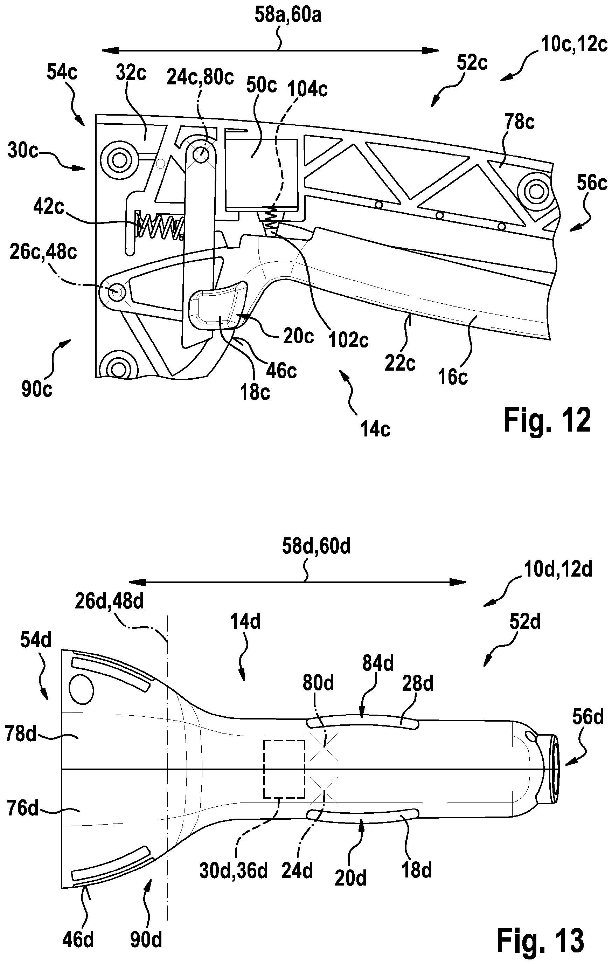

Das Freigabeelement 18c ist schwenkbar um zumindest eine Freigabebewegungsachse 24c gelagert. Die Freigabebewegungsachse 24c ist somit als Freigabeschwenkachse ausgebildet. Das Freigabeelement 18c weist somit zumindest die Freigabebewegungsachse 24c auf, die zumindest im Wesentlichen parallel zu einer als Schwenkachse 48c ausgebildeten Bewegungsachse 26c des Schaltklinkenelements 16c verläuft (Figur 12). Die Bewegungsachse 26c des Schaltklinkenelements 16c verläuft zumindest im Wesentlichen senkrecht zu einer Verbindungsebene des Handgriffgehäuses 32b, in der zwei Handgriffgehäuseschalenelemente 76c, 78c verbindbar sind. Hierbei ist das Schaltklinkenelement 16c mittels einer Lagereinheit 90c der tragbaren Werkzeugmaschine 10c an einem einem Anbindungsbereich 54c des Handgriffgehäuses 32c zugewandten Ende des Schaltklinkenelements 16c schwenkbar gelagert. Es ist jedoch auch denkbar, dass das Schaltklinkenelement 16c an einem dem Anbindungsbereich 54c abgewandten Ende des Schaltklinkenelements 16c mittels der Lagereinheit 90c schwenkbar gelagert ist oder translatorisch mittels der Lagereinheit 90c gelagert ist.

Des Weiteren weist die Schalteinheit 14c zumindest ein weiteres Freigabeelement 28c auf. Das weitere Freigabeelement 28c ist ebenfalls im Bereich des dem Anbindungsbereich 54c zugewandten Endes des Handgriffgehäuses 32c am Handgriffgehäuse 32c angeordnet. Zudem ist das weitere Freigabeelement 28c ebenfalls vollständig außerhalb des stielförmigen Griffbereichs 52c am Handgriffgehäuse 32c angeordnet. Das weitere Freigabeelement 28c ist spiegelsymmetrisch zum Freigabeelement 18c angeordnet. Somit weist das weitere Freigabeelement 28c zumindest einen Betätigungsbereich 34c auf, der, bezogen auf eine sich zumindest im Wesentlichen senkrecht zur Bewegungsachse 26c des Schaltklinkenelements 16c erstreckende Ebene, spiegelsymmetrisch zum Betätigungsbereich 20c des Freigabeelements18c zumindest teilweise seitlich neben der Bedienfläche 22c des Schaltklinkenelements 16c angeordnet ist. Hierbei sind das Freigabeelement 18c und das weitere Freigabeelement 28c mittels einer Bewegungsabhängigkeitseinheit 30c der tragbaren Werkzeugmaschine 10c bewegungstechnisch miteinander gekoppelt. Die Bewegungsabhängigkeitseinheit 30c koppelt hierbei das Freigabeelement 18c und das weitere Freigabeelement 28c starr miteinander. Das Freigabeelement 18c und das weitere Freigabeelement 28c werden somit bei einer Betätigung des Freigabeelements 18c oder des weiteren Freigabeelements 28c stets zusammen in eine gleiche Richtung bewegt. Hierbei werden das Freigabeelement 18c und das weitere Freigabeelement 28c infolge einer Betätigung des Freigabeelements 18c oder des weiteren Freigabeelements 28c in eine dem Handgriffgehäuse 32c zugewandte Richtung mittels der Bewegungsabhängigkeitseinheit 30c in eine dem Handgriffgehäuse 32c zugewandte Richtung bewegt.

Figur 13 zeigt eine Detailansicht eines an einem Handgriffgehäuse 32d einer alternativen, nicht erfindungsgemäßen als tragbare Werkzeugmaschine 10d ausgebildeten Werkzeugmaschine 10d angeordneten Freigabeelements 18d einer Schalteinheit 14d der tragbaren Werkzeugmaschine 10d in einem unbetätigten Zustand des Freigabeelements 18d. Die Werkzeugmaschine 10d weist einen zumindest im Wesentlichen analogen Aufbau zur Werkzeugmaschine 10a aus Figur 1 auf. Somit kann bezüglich einer Beschreibung bzw. Merkmalen der Werkzeugmaschine 10d des weiteren Ausführungsbeispiels zumindest im Wesentlichen auf die Beschreibung der Figur 1 verwiesen werden. Die Werkzeugmaschine 10d umfasst zumindest eine Schalteinheit 14d, die zumindest ein beweglich gelagertes Schaltklinkenelement (hier nicht näher dargestellt) und zumindest ein Freigabeelement 18d zu einer Entriegelung einer Bewegungssperre des Schaltklinkenelements 16d aufweist. Das Freigabeelement 18d umfasst zumindest einen Betätigungsbereich 20d des Freigabeelements 18d, der zumindest teilweise seitlich neben einer Bedienfläche (hier nicht näher dargestellt) des Schaltklinkenelements angeordnet ist. Das Freigabeelement 18d ist vollständig an einem stielförmigen Griffbereich 52d des Handgriffgehäuses 32d angeordnet.

Das Freigabeelement 18d ist schwenkbar um eine Freigabebewegungsachse 24d des Freigabeelements 18d gelagert. Das Freigabeelement 18d weist zumindest die Freigabebewegungsachse 24d auf, die in einer sich zumindest im Wesentlichen senkrecht zu einer Bewegungsachse 26d des Schaltklinkenelements 16d erstreckenden Ebene verläuft. Es ist jedoch auch denkbar, dass das Freigabeelement 18d alternativ zur schwenkbaren Lagerung translatorisch entlang einer zumindest im Wesentlichen parallel zur Bewegungsachse 26d des Schaltklinkenelements verlaufenden Freigabebewegungsachse 24d beweglich gelagert ist. Das Schaltklinkenelement 16d ist hierbei schwenkbar um eine als Schwenkachse 48d ausgebildete Bewegungsachse 26d des Schaltklinkenelements gelagert. Die als Schwenkachse 48d ausgebildete Bewegungsachse 26d verläuft zumindest im Wesentlichen senkrecht zu einer Verbindungsebene des Handgriffgehäuses 32d, in der zwei Handgriffgehäuseschalenelemente 76d, 78d des Handgriffgehäuses 32d miteinander verbunden sind. Des Weiteren weist die Schalteinheit 14d zumindest ein weiteres Freigabeelement 28d auf. Das weitere Freigabeelement 28d ist ebenfalls vollständig in dem stielförmigen Griffbereich 52d am Handgriffgehäuse 32d angeordnet. Das weitere Freigabeelement 28d ist spiegelsymmetrisch zum Freigabeelement 18d am Handgriffgehäuse 32d angeordnet. Hierbei sind das Freigabeelement 18d und das weitere Freigabeelement 28d mittels einer Bewegungsabhängigkeitseinheit 30d der tragbaren Werkzeugmaschine 10d bewegungstechnisch miteinander gekoppelt.

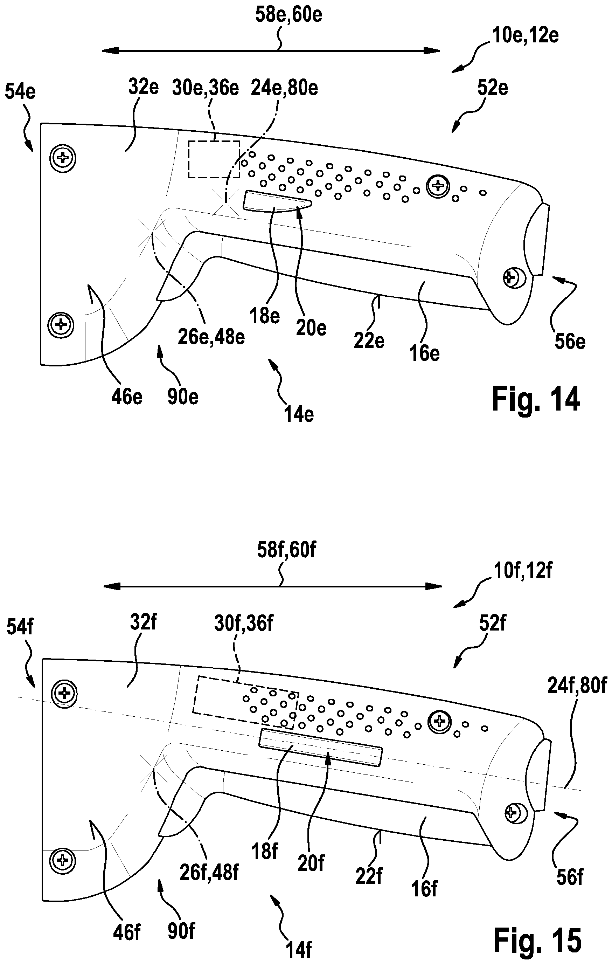

Figur 14 zeigt eine Detailansicht eines an einem Handgriffgehäuse 32e einer alternativen, als tragbare Werkzeugmaschine 10e ausgebildeten Werkzeugmaschine 10e angeordneten Freigabeelements 18e einer Schalteinheit 14e der tragbaren Werkzeugmaschine 10e in einem unbetätigten Zustand des Freigabeelements 18e. Die Werkzeugmaschine 10e weist einen zumindest im Wesentlichen analogen Aufbau zur Werkzeugmaschine 10a aus Figur 1 auf. Somit kann bezüglich einer Beschreibung bzw. Merkmalen der Werkzeugmaschine 10e des weiteren Ausführungsbeispiels zumindest im Wesentlichen auf die Beschreibung der Figur 1 verwiesen werden. Die Werkzeugmaschine 10e umfasst zumindest eine Schalteinheit 14e, die zumindest ein beweglich gelagertes Schaltklinkenelement 16e und zumindest ein Freigabeelement 18e zu einer Entriegelung einer Bewegungssperre des Schaltklinkenelements 16e aufweist. Das Freigabeelement 18e umfasst zumindest einen Betätigungsbereich 20e des Freigabeelements 18e, der zumindest teilweise seitlich neben einer Bedienfläche 22e des Schaltklinkenelements 16e angeordnet ist. Das Freigabeelement 18e ist vollständig in einem stielförmigen Griffbereich 52e des Handgriffgehäuses 32e angeordnet. Hierbei weist das Freigabeelement 18e zumindest eine Freigabebewegungsachse 24e auf, die zumindest im Wesentlichen parallel zu einer als Schwenkachse 48e ausgebildeten Bewegungsachse 26e des Schaltklinkenelements 16e verläuft. Das Freigabeelement 18e ist schwenkbar um die Freigabebewegungsachse 24e. Des Weiteren weist die Schalteinheit 14e zumindest ein weiteres Freigabeelement (hier nicht näher dargestellt) auf. Das weitere Freigabeelement ist ebenfalls vollständig in dem stielförmigen Griffbereich 52e am Handgriffgehäuse 32e angeordnet. Das weitere Freigabeelement ist spiegelsymmetrisch zum Freigabeelement 18e am Handgriffgehäuse 32e angeordnet. Hierbei sind das Freigabeelement 18e und das weitere Freigabeelement mittels einer Bewegungsabhängigkeitseinheit 30e der tragbaren Werkzeugmaschine 10e bewegungstechnisch miteinander gekoppelt.

Figur 15 zeigt eine Detailansicht eines an einem Handgriffgehäuse 32f einer alternativen, als tragbare Werkzeugmaschine 10f ausgebildeten Werkzeugmaschine 10f angeordneten Freigabeelements 18f einer Schalteinheit 14f der tragbaren Werkzeugmaschine 10f in einem unbetätigten Zustand des Freigabeelements 18f. Die Werkzeugmaschine 10f weist einen zumindest im Wesentlichen analogen Aufbau zur Werkzeugmaschine 10a aus Figur 1 auf. Somit kann bezüglich einer Beschreibung bzw. Merkmalen der Werkzeugmaschine 10f des weiteren Ausführungsbeispiels zumindest im Wesentlichen auf die Beschreibung der Figur 1 verwiesen werden. Die Werkzeugmaschine 10f umfasst zumindest eine Schalteinheit 14f, die zumindest ein beweglich gelagertes Schaltklinkenelement 16f und zumindest ein Freigabeelement 18f zu einer Entriegelung einer Bewegungssperre des Schaltklinkenelements 16f aufweist. Das Freigabeelement 18f umfasst zumindest einen Betätigungsbereich 20f des Freigabeelements 18f, der zumindest teilweise seitlich neben einer Bedienfläche 22f des Schaltklinkenelements 16f angeordnet ist. Das Freigabeelement 18f ist vollständig in einem stielförmigen Griffbereich 52f des Handgriffgehäuses 32f angeordnet. Hierbei weist das Freigabeelement 18f zumindest eine Freigabebewegungsachse 24f auf, die in einer Verbindungsebene des Handgriffgehäuses 32f und zumindest im Wesentlichen quer zu einer als Schwenkachse 48f ausgebildeten Bewegungsachse 26f des Schaltklinkenelements 16f verläuft. Das Freigabeelement 18f ist translatorisch beweglich entlang der Freigabebewegungsachse 24f gelagert. Des Weiteren weist die Schalteinheit 14f zumindest ein weiteres Freigabeelement (hier nicht näher dargestellt) auf. Das weitere Freigabeelement ist ebenfalls vollständig in dem stielförmigen Griffbereich 52f am Handgriffgehäuse 32f angeordnet. Das weitere Freigabeelement ist spiegelsymmetrisch zum Freigabeelement 18f am Handgriffgehäuse 32f angeordnet. Hierbei sind das Freigabeelement 18f und das weitere Freigabeelement mittels einer Bewegungsabhängigkeitseinheit 30f der tragbaren Werkzeugmaschine 10f bewegungstechnisch miteinander gekoppelt.

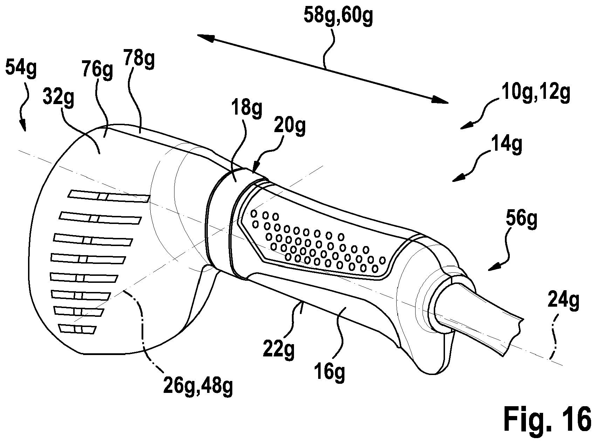

Figur 16 zeigt eine Detailansicht eines an einem Handgriffgehäuse 32g einer alternativen, als tragbare Werkzeugmaschine 10g ausgebildeten Werkzeugmaschine 10g angeordneten Freigabeelements 18g einer Schalteinheit 14g der tragbaren Werkzeugmaschine 10g in einem unbetätigten Zustand des Freigabeelements 18g. Die Werkzeugmaschine 10g weist einen zumindest im Wesentlichen analogen Aufbau zur Werkzeugmaschine 10a aus Figur 1 auf. Somit kann bezüglich einer Beschreibung bzw. Merkmalen der Werkzeugmaschine 10g des weiteren Ausführungsbeispiels zumindest im Wesentlichen auf die Beschreibung der Figur 1 verwiesen werden. Die Werkzeugmaschine 10g umfasst zumindest eine Schalteinheit 14g, die zumindest ein beweglich gelagertes Schaltklinkenelement 16g und zumindest ein Freigabeelement 18g zu einer Entriegelung einer Bewegungssperre des Schaltklinkenelements 16g aufweist. Das Freigabeelement 18g umfasst zumindest einen Betätigungsbereich 20g des Freigabeelements 18g, der zumindest teilweise seitlich neben einer Bedienfläche 22g des Schaltklinkenelements 16g angeordnet ist. Das Freigabeelement 18g ist vollständig in einem stielförmigen Griffbereich 52g des Handgriffgehäuses 32g angeordnet. Hierbei weist das Freigabeelement 18g zumindest eine Freigabebewegungsachse 24g auf, die zumindest im Wesentlichen quer zu einer als Schwenkachse 48g ausgebildeten Bewegungsachse 26g des Schaltklinkenelements 16g verläuft. Die Freigabebewegungsachse 24g erstreckt sich in einer Verbindungsebene des Handgriffgehäuses 32g, die zumindest im Wesentlichen senkrecht zur Bewegungsachse 26g des Schaltklinkenelements 16g verläuft. Das Freigabeelement 18g ist drehbar um die Freigabebewegungsachse 24g am Handgriffgehäuse 32g gelagert.

## Patentansprüche

1. Tragbare Werkzeugmaschine, insbesondere Winkelschleifmaschine, mit einem Handgriffgehäuse mit einem stielförmigen Griffbereich oder mit einem Handgriffgehäuse in Topfbauweise und mit zumindest einer Schalteinheit (14a; 14b; 14c; 14d; 14e; 14f; 14g), die zumindest ein beweglich gelagertes Schaltklinkenelement (16a; 16b; 16c; 16d; 16e; 16f; 16g) und zumindest ein Freigabeelement (18a; 18b; 18c; 18d; 18e; 18f; 18g) zu einer Entriegelung einer Bewegungssperre des Schaltklinkenelements (16a; 16b; 16c; 16d; 16e; 16f; 16g) aufweist, wobei das Schaltklinkenelement (16a; 16b; 16c; 16d; 16e; 16f; 16g) an einem Griffbereich (52a) des Handgriffgehäuses (32a) angeordnet ist und das Freigabeelement zumindest einen Betätigungsbereich (20a; 20b; 20c; 20d; 20e; 20f; 20g) aufweist, wobei der Betätigungsbereich (20a; 20b; 20c; 20d; 20e; 20f; 20g) des Freigabeelements (18a; 18b; 18c; 18d; 18e; 18f; 18g) seitlich neben einer Bedienfläche (22a, 22b; 22c; 22d; 22e; 22f; 22g) des Schaltklinkenelements (16a; 16b; 16c; 16d; 16e; 16f; 16g) angeordnet ist und das Freigabeelement (18a; 18b; 18c; 18d; 18e; 18f; 18g) schwenkbar und/oder drehbar um zumindest eine Freigabebewegungsachse (24a; 24b; 24c; 24d; 24e; 24g) gelagert ist, **dadurch gekennzeichnet, dass** die zumindest eine Freigabebewegungsachse (24a; 24b; 24d; 24g) in einer sich zumindest im Wesentlichen senkrecht zu einer Bewegungsachse (26a; 26b; 26d; 26g) des Schaltklinkenelements (16a; 16b; 16d; 16g) erstreckenden Ebene verläuft.

2. Tragbare Werkzeugmaschine nach Anspruch 1, **dadurch gekennzeichnet, dass** die Schalteinheit (14a; 14b; 14c; 14d; 14e; 14f) zumindest ein weiteres Freigabeelement (28a; 28b; 28c; 28d) aufweist.

3. Tragbare Werkzeugmaschine nach Anspruch 2, **gekennzeichnet durch** zumindest eine Bewegungsabhängigkeitseinheit (30a; 30b; 30c; 30d; 30e; 30f), die das Freigabeelement (18a; 18b; 18c; 18d; 18e; 18f) und das weitere Freigabeelement (28a; 28b; 28c; 28d) zumindest in einem montierten Zustand bewegungstechnisch miteinander koppelt.

4. Tragbare Werkzeugmaschine nach Anspruch 3, **gekennzeichnet durch** zumindest ein Handgriffgehäuse (32a; 32b; 32c; 32d; 32e; 32f), wobei das Freigabeelement (18a; 18b; 18c; 18d; 18e; 18f) und das weitere Freigabeelement (28a; 28b; 28c; 28d) infolge einer Betätigung des Freigabeelements (18a; 18b; 18c; 18d; 18e; 18f) oder des weiteren Freigabeelements (28a; 28b; 28c; 28d) in eine dem Handgriffgehäuse (32a; 32b; 32c; 32d; 32e; 32f) zugewandte Richtung mittels der Bewegungsabhängigkeitseinheit (30a; 30b; 30c; 30d; 30e; 30f; 30g) in eine dem Handgriffgehäuse (32a; 32b; 32c; 32d; 32e; 32f) zugewandte Richtung bewegt werden.

5. Tragbare Werkzeugmaschine nach einem der Ansprüche 2 bis 4, **dadurch gekennzeichnet, dass** das weitere Freigabeelement (28a; 28b; 28c; 28d) spiegelsymmetrisch zum Freigabeelement (18a; 18b; 18c; 18d; 18e; 18f) angeordnet ist.

6. Tragbare Werkzeugmaschine nach einem der Ansprüche 2 bis 5, **dadurch gekennzeichnet, dass** das weitere Freigabeelement (28a; 28b; 28c; 28d) zumindest einen Betätigungsbereich (34a; 34b; 34c; 34d) aufweist, der, bezogen auf eine sich zumindest im Wesentlichen senkrecht zu einer Bewegungsachse (26a; 26b; 26c; 26d; 26e; 26f) des Schaltklinkenelements (16a; 16b; 16c; 16d; 16e; 16f) erstreckende Ebene, spiegelsymmetrisch zum Betätigungsbereich (20a; 20b; 20c; 20d; 20e; 20f) des Freigabeelements (18a; 18b; 18c; 18d; 18e; 18f) zumindest teilweise seitlich neben der Bedienfläche (22a; 22b; 22c; 22e; 22f) des Schaltklinkenelements (16a; 16b; 16c; 16d; 16e; 16f) angeordnet ist.

7. Tragbare Werkzeugmaschine zumindest nach Anspruch 2, **dadurch gekennzeichnet, dass** das Freigabeelement (18a; 18b; 18d; 18e; 18f) und das weitere Freigabeelement (28a; 28b; 28d) relativ beweglich zueinander gelagert sind.

8. Tragbare Werkzeugmaschine nach Anspruch 7, **gekennzeichnet durch** zumindest eine Bewegungsabhängigkeitseinheit (30a; 30b; 30d; 30e; 30f), die dazu vorgesehen ist, infolge einer Betätigung des Freigabeelements (18a; 18b; 18d; 18e; 18f) oder des weiteren Freigabeelements (28a; 28b; 28d) das Freigabeelement (18a; 18b; 18d; 18e; 18f) und das weitere Freigabeelement (28a; 28b; 28d) in entgegengesetzt gerichtete Richtungen zu bewegen.

9. Tragbare Werkzeugmaschine nach Anspruch 8, **dadurch gekennzeichnet, dass** die Bewegungsabhängigkeitseinheit (30a; 30b; 30d; 30e; 30f) als Gelenkeinheit (36a; 36b; 36d; 36e; 36f) ausgebildet ist.

10. Tragbare Werkzeugmaschine nach Anspruch 8 oder 9, **dadurch gekennzeichnet, dass** die Bewegungsabhängigkeitseinheit (30a; 30b; 30d; 30e; 30f) als Gelenkeinheit (36a; 36b; 36d; 36e; 36f) ausgebildet ist, die zumindest ein Gelenkelement (38a, 40a) aufweist, das einstückig mit dem Freigabeelement (18a; 18b; 18d; 18e; 18f) oder dem weiteren Freigabeelement (28a; 28b; 28d) ausgebildet ist.

11. Tragbare Werkzeugmaschine nach einem der vorhergehenden Ansprüche, **dadurch gekennzeichnet, dass** die Schalteinheit (14a; 14b; 14c; 14d; 14e; 14f; 14g) zumindest ein Federelement (42a) aufweist, das dazu vorgesehen ist, zumindest das Freigabeelement (18a; 18b; 18c; 18d; 18e; 18f; 18g) mit einer Federkraft in Richtung einer Verriegelungsstellung des Freigabeelements (18a; 18b; 18c; 18d; 18e; 18f; 18g) zu beaufschlagen.

12. Tragbare Werkzeugmaschine nach einem der vorhergehenden Ansprüche, **dadurch gekennzeichnet, dass** die Schalteinheit (14a) zumindest ein Federelement (42a) aufweist (42a), das sich mit einem Ende an dem Freigabeelement (18a) abstützt und sich mit einem weiteren Ende an einem weiteren Freigabeelement (28a) der Schalteinheit (14a) abstützt.

13. Tragbare Werkzeugmaschine nach einem der vorhergehenden Ansprüche, **dadurch gekennzeichnet, dass** das Freigabeelement (18a; 18b; 18c; 18d; 18e; 18f; 18g) zumindest eine Entriegelungsaufnahmeausnehmung (44a) aufweist, die dazu vorgesehen ist, in einer Entriegelungsstellung des Freigabeelements (18a; 18b; 18c; 18d; 18e; 18g; 18h) infolge einer Betätigung des Schaltklinkenelements (16a; 16b; 16c; 16d; 16e; 16f; 16g) ein Sperrelement (94a) der Schalteinheit (14a; 14b; 14c; 14d; 14e; 14f; 14g) aufzunehmen.

14. Tragbare Werkzeugmaschine nach einem der vorhergehenden Ansprüche, **gekennzeichnet durch** zumindest ein Handgriffgehäuse (32a; 32b; 32c; 32d; 32e; 32f), wobei der Betätigungsbereich (20a; 20b; 20c; 20d; 20e; 20f) des Freigabeelements (18a; 18b; 18c; 18d; 18e; 18f) nach einer Betätigung zumindest im Wesentlichen bündig mit einer Außenfläche (46a; 46b; 46c; 46d; 46e; 46f) des Handgriffgehäuses (32a; 32b; 32c; 32d; 32e; 32f) abschließt.

15. Tragbare Werkzeugmaschine nach einem der vorhergehenden Ansprüche, **gekennzeichnet durch** zumindest ein Handgriffgehäuse (32a; 32b; 32c; 32d; 32e; 32f), wobei der Betätigungsbereich (20a; 20b; 20c; 20d; 20e; 20f) des Freigabeelements (18a; 18b; 18c; 18d; 18e; 18f) und ein Betätigungsbereich (34a; 34b; 34c; 34d) eines weiteren Freigabeelements (28a; 28b; 28c; 28d) der Schalteinheit (14a; 14b; 14c; 14d; 14e; 14f) nach einer Betätigung zumindest im Wesentlichen bündig mit einer Außenfläche (46a; 46b; 46c; 46d; 46e; 46f) des Handgriffgehäuses (32a; 32b; 32c; 32d; 32e; 32f) abschließen.

16. Tragbare Werkzeugmaschine nach einem der vorhergehenden Ansprüche, **dadurch gekennzeichnet, dass** das Schaltklinkenelement (16a; 16b; 16c; 16d; 16e; 16f; 16g) schwenkbar um eine als Schwenkachse (48a; 48b; 48c; 48d; 48e; 48f; 48g) ausgebildete Bewegungsachse (26a; 26b; 26c; 26d; 26e; 26f; 26g) des Schaltklinkenelements (16a; 16b; 16c; 16d; 16e; 16f; 16g) gelagert ist.

## Claims

1. Portable power tool, in particular angle grinder, comprising a handle housing having a stem-type grip region or comprising a handle housing with a pot-type structure and comprising at least one switching unit (14a; 14b; 14c; 14d; 14e; 14f; 14g), which has at least one movably mounted latch element (16a; 16b; 16c; 16d; 16e; 16f; 16g) and has at least one release element (18a; 18b; 18c; 18d; 18e; 18f; 18g) for unlocking a movement inhibitor of the latch element (16a; 16b; 16c; 16d; 16e; 16f; 16g), wherein the latch element (16a; 16b; 16c; 16d; 16e; 16f; 16g) is arranged on a grip region (52a) of the handle housing (32a) and the release element has at least one actuating region (20a; 20b; 20c; 20d; 20e; 20f; 20g), wherein the actuating region (20a; 20b; 20c; 20d; 20e; 20f; 20g) of the release element (18a; 18b; 18c; 18d; 18e; 18f; 18g) is arranged laterally next to an operating surface (22a, 22b; 22c; 22d; 22e; 22f; 22g) of the latch element (16a; 16b; 16c; 16d; 16e; 16f; 16g) and the release element (18a; 18b; 18c; 18d; 18e; 18f; 18g) is mounted so as to be pivotable and/or rotatable about at least one release movement axis (24a; 24b; 24c; 24d; 24e; 24g), **characterized in that** the at least one release movement axis (24a; 24b; 24d; 24g) runs in a plane extending at least substantially perpendicularly in relation to a movement axis (26a; 26b; 26d; 26g) of the latch element (16a; 16b; 16d; 16g).

2. Portable power tool according to Claim 1, **characterized in that** the switching unit (14a; 14b; 14c; 14d; 14e; 14f) has at least one further release element (28a; 28b; 28c; 28d).

3. Portable power tool according to Claim 2, **characterized by** at least one movement dependence unit (30a; 30b; 30c; 30d; 30e; 30f), which motionally couples the release element (18a; 18b; 18c; 18d; 18e; 18f) and the further release element (28a; 28b; 28c; 28d) to each other, at least when in a mounted state.

4. Portable power tool according to Claim 3, **characterized by** at least one handle housing (32a; 32b; 32c; 32d; 32e; 32f), wherein, as a result of an actuation of the release element (18a; 18b; 18c; 18d; 18e; 18f) or of the further release element (28a; 28b; 28c; 28d) in a direction toward the handle housing (32a; 32b; 32c; 32d; 32e; 32f), the release element (18a; 18b; 18c; 18d; 18e; 18f) and the further release element (28a; 28b; 28c; 28d) are moved, by means of the movement dependence unit (30a; 30b; 30c; 30d; 30e; 30f; 30g), in a direction toward the handle housing (32a; 32b; 32c; 32d; 32e; 32f).

5. Portable power tool according to any one of Claims 2 to 4, **characterized in that** the further release element (28a; 28b; 28c; 28d) is arranged in a mirror-symmetrical manner in relation to the release element (18a; 18b; 18c; 18d; 18e; 18f).

6. Portable power tool according to any one of Claims 2 to 5, **characterized in that** the further release element (28a; 28b; 28c; 28d) has at least one actuating region (34a; 34b; 34c; 34d), which, in respect of a plane extending at least substantially perpendicularly in relation to a movement axis (26a; 26b; 26c; 26d; 26e; 26f) of the latch element (16a; 16b; 16c; 16d; 16e; 16f), is arranged, at least partially, laterally next to the operating surface (22a; 22b; 22c; 22e; 22f) of the latch element (16a; 16b; 16c; 16d; 16e; 16f), in a mirror-symmetrical manner in relation to the actuating region (20a; 20b; 20c; 20d; 20e; 20f).

7. Portable power tool at least according to Claim 2, **characterized in that** the release element (18a; 18b; 18d; 18e; 18f) and the further release element (28a; 28b; 28d) are mounted so as to be movable relative to each other.

8. Portable power tool according to Claim 7, **characterized by** at least one movement dependence unit (30a; 30b; 30d; 30e; 30f), which is provided to move the release element (18a; 18b; 18d; 18e; 18f) and the further release element (28a; 28b; 28d) in opposite directions as a result of an actuation of the release element (18a; 18b; 18d; 18e; 18f) or of the further release element (28a; 28b; 28d).

9. Portable power tool according to Claim 8, **characterized in that** the movement dependence unit (30a; 30b; 30d; 30e; 30f) is realized as a link unit (36a; 36b; 36d; 36e; 36f).

10. Portable power tool according to Claim 8 or 9, **characterized in that** the movement dependence unit (30a; 30b; 30d; 30e; 30f) is realized as a link unit (36a; 36b; 36d; 36e; 36f), which has at least one link element (38a, 40a), which is realized so as to be integral with the release element (18a; 18b; 18d; 18e; 18f) or with the further release element (28a; 28b; 28d).

11. Portable power tool according to any one of the preceding claims, **characterized in that** the switching unit (14a; 14b; 14c; 14d; 14e; 14f; 14g) has at least one spring element (42a), which is provided to apply a spring force to, at least, the release element (18a; 18b; 18c; 18d; 18e; 18f; 18g), in the direction of a locking position of the release element (18a; 18b; 18c; 18d; 18e; 18f; 18g).

12. Portable power tool according to any one of the preceding claims, **characterized in that** the switching unit (14a) has (42a) at least one spring element (42a), which is supported, by one end, on the release element (18a) and, by a further end, is supported on a further release element (28a) of the switching unit (14a).

13. Portable power tool according to any one of the preceding claims, **characterized in that** the release element (18a; 18b; 18c; 18d; 18e; 18f; 18g) has at least one unlocking receiving recess (44a), which is provided to receive an inhibitor element (94a) of the switching unit (14a; 14b; 14c; 14d; 14e; 14f; 14g), when the release element (18a; 18b; 18c; 18d; 18e; 18g; 18h) is in an unlocking position, as a result of an actuation of the latch element (16a; 16b; 16c; 16d; 16e; 16f; 16g).

14. Portable power tool according to any one of the preceding claims, **characterized by** at least one handle housing (32a; 32b; 32c; 32d; 32e; 32f), wherein the actuating region (20a; 20b; 20c; 20d; 20e; 20f) of the release element (18a; 18b; 18c; 18d; 18e; 18f), after an actuation, is at least substantially flush with an outer surface (46a; 46b; 46c; 46d; 46e; 46f) of the handle housing (32a; 32b; 32c; 32d; 32e; 32f).

15. Portable power tool according to any one of the preceding claims, **characterized by** at least one handle housing (32a; 32b; 32c; 32d; 32e; 32f), wherein the actuating region (20a; 20b; 20c; 20d; 20e; 20f) of the release element (18a; 18b; 18c; 18d; 18e; 18f) and an actuating region (34a; 34b; 34c; 34d) of a further release element (28a; 28b; 28c; 28d) of the switching unit (14a; 14b; 14c; 14d; 14e; 14f), after an actuation, are at least substantially flush with an outer surface (46a; 46b; 46c; 46d; 46e; 46f) of the handle housing (32a; 32b; 32c; 32d; 32e; 32f).

16. Portable power tool according to any one of the preceding claims, **characterized in that** the latch element (16a; 16b; 16c; 16d; 16e; 16f; 16g) is mounted so as to be pivotable about a movement axis (26a; 26b; 26c; 26d; 26e; 26f; 26g), realized as a pivot axis (48a; 48b; 48c; 48d; 48e; 48f; 48g), of the latch element (16a; 16b; 16c; 16d; 16e; 16f; 16g).

## Revendications

1. Machine-outil portable, en particulier meuleuse d'angle, présentant
un boîtier de poignée doté d'une partie de saisie en forme de manche ou d'un boîtier de poignée en forme de pot et au moins une unité de commutation (14a; 14b; 14c; 14d; 14e; 14f; 14g) qui présente au moins un élément de commutation encliquetable (16a; 16b; 16c; 16d; 16e; 16f; 16g) monté à déplacement et au moins un élément de libération (18a; 18b; 18c; 18d; 18e; 18f; 18g) qui permet de déverrouiller un verrou de déplacement de l'élément de commutation encliquetable (16a; 16b; 16c; 16d; 16e; 16f; 16g), l'élément de commutation encliquetable (16a; 16b; 16c; 16d; 16e; 16f; 16g) étant disposé sur une partie de saisie (52a) du boîtier de poignée (32a) et l'élément de libération présentant au moins une plage d'actionnement (20a; 20b; 20c; 20d; 20e; 20f; 20g), la plage d'actionnement (20a; 20b; 20c; 20d; 20e; 20f; 20g) de l'élément de libération (18a; 18b; 18c; 18d; 18e; 18f; 18g) étant disposée latéralement à côté d'une surface de commande (22a; 22b; 22c; 22d; 22e; 22f; 22g) de l'élément de commutation encliquetable (16a; 16b; 16c; 16d; 16e; 16f; 16g) et l'élément de libération (18a; 18b; 18c; 18d; 18e; 18f; 18g) étant monté à pivotement et/ou à rotation autour d'au moins un axe (24a; 24b; 24c; 24d; 24e; 24f; 24g) de déplacement de libération, **caractérisée en ce que** le ou les axes (24a; 24b; 24d; 24g) de déplacement de libération s'étendent dans un plan au moins essentiellement perpendiculaire à un axe de déplacement (24a; 26b; 26d; 26g) de l'élément de commutation encliquetable (16a; 16b; 16d; 16g).

2. Machine-outil portable selon la revendication 1, **caractérisée en ce que** l'unité de commutation (14a; 14b; 14c; 14d; 14e; 14f) présente au moins un autre élément de libération (28a; 28b; 28c; 28d).

3. Machine-outil portable selon la revendication 2, **caractérisée par** au moins une unité d'accouplement de déplacement (30a; 30b; 30c; 30d; 30e; 30f) qui accouple l'un à l'autre en termes de déplacement l'élément de libération (18a; 18b; 18c; 18d; 18e; 18f) et l'autre élément de libération (28a; 28b; 28c; 28d) au moins lorsqu'ils sont montés.

4. Machine-outil portable selon la revendication 3, **caractérisée par** au moins un boîtier de poignée (32a; 32b; 32c; 32d; 32e; 32f), l'élément de libération (18a; 18b; 18c; 18d; 18e; 18f) et l'autre élément de libération (28a; 28b; 28c; 28d) étant déplacés dans une direction orientée vers le boîtier de poignée (32a; 32b; 32c; 32d; 32e; 32f) suite à un actionnement de l'élément de libération (18a; 18b; 18c; 18d; 18e; 18f) ou de l'autre élément de libération (28a; 28b; 28c; 28d) dans une direction orientée vers le boîtier de poignée (32a; 32b; 32c; 32d; 32e; 32f), au moyen de l'unité d'accouplement de déplacement (30a; 30b; 30c; 30d; 30e; 30f; 30g).

5. Machine-outil selon l'une des revendications 2 à 4, **caractérisée en ce que** l'autre élément de libération (28a; 28b; 28c; 28d) est disposé à symétrie spéculaire par rapport à l'élément de libération (18a; 18b; 18c; 18d; 18e; 18f).

6. Machine-outil selon l'une des revendications 2 à 5, **caractérisée en ce que** l'autre élément de libération (28a; 28b; 28c; 28d) présente au moins une plage d'actionnement (34a; 34b; 34c; 34d) qui est disposé à symétrie spéculaire de la plage d'actionnement (20a; 20b; 20c; 20d; 20e; 20f) de l'élément de libération (18a; 18b; 18c; 18d; 18e; 18f) par rapport à un plan au moins essentiellement perpendiculaire à un axe de déplacement (26a; 26b; 26c; 26d; 26e; 26f) de l'élément de commutation encliquetable (16a; 16b; 16c; 16d; 16e; 16f), au moins en partie latéralement à côté de la surface de commande (22a; 22b; 22c; 22e; 22f) de l'élément de commutation encliquetable (16a; 16b; 16c; 16d; 16e; 16f).

7. Machine-outil selon au moins la revendication 2, **caractérisée en ce que** l'élément de libération (18a; 18b; 18d; 18e; 18f) et l'autre de libération (28a; 28b; 28d) sont montés de manière à pouvoir se déplacer l'un par rapport à l'autre.

8. Machine-outil portable selon la revendication 7, **caractérisée par** au moins une unité d'accouplement de déplacement (30a; 30b; 30d; 30e; 30f) prévue pour déplacer l'élément de libération (18a; 18b; 18d; 18e; 18f) et l'autre élément de libération (28a; 28b; 28d) dans des directions mutuellement opposées suite à un actionnement de l'élément de libération (18a; 18b; 18d; 18e; 18f) ou de l'autre élément de libération (28a; 28b; 28d).

9. Machine-outil portable selon la revendication 8, **caractérisée en ce que** l'unité d'accouplement de déplacement (30a; 30b; 30d; 30e; 30f) est configurée comme unité articulée (36a; 36b; 36d; 36e; 36f).

10. Machine-outil portable selon les revendications 8 ou 9, **caractérisée en ce que** l'unité d'accouplement de déplacement (30a; 30b; 30d; 30e; 30f) est configurée comme unité articulée (36a; 36b; 36d; 36e; 36f) qui présente au moins un élément articulé (38a; 40a) configuré d'une seule pièce avec l'élément de libération (18a; 18b; 18d; 18e; 18f) ou l'autre élément de libération (28a; 28b; 28d).

11. Machine-outil portable selon l'une des revendications précédentes, **caractérisée en ce que** l'unité de commutation (14a; 14b; 14c; 14d; 14e; 14f; 14g) présente au moins un élément élastique (42a) prévu pour appliquer au moins sur l'élément de libération (18a; 18b, 18c; 18d; 18e; 18f; 18g) une force élastique en direction d'une position de verrouillage de l'élément de libération (18a; 18b; 18c; 18d; 18e; 18f; 18g).

12. Machine-outil portable selon l'une des revendications précédentes, **caractérisée en ce que** l'unité de commutation (14a) présente (42a) au moins un élément élastique (42a) qui s'appuie par une extrémité sur l'élément de libération (18a) et par l'autre extrémité sur un autre élément de libération (28a) de l'unité de commutation (14a).

13. Machine-outil portable selon l'une des revendications précédentes, **caractérisée en ce que** l'élément de libération (18a; 18b; 18c; 18d; 18e; 18f; 18g) présente au moins une découpe (44a) de réception de déverrouillage prévue pour, dans une position de déverrouillage de l'élément de libération (18a; 18b; 18c; 18d; 18e; 18g; 18h) suite à un actionnement de l'élément de commutation encliquetable (16a; 16b; 16c; 16d; 16e; 16f; 16g) reprendre un élément de blocage (94a) de l'unité de commutation (14a; 14b; 14c; 14d; 14e; 14f; 14g).

14. Machine-outil portable selon l'une des revendications précédentes, **caractérisée par** au moins un boîtier de poignée (32a; 32b; 32c; 32d; 32e; 32f), la plage d'actionnement (20a; 20b; 20c; 20d; 20e; 20f) de l'élément de libération (18a; 18b; 18c; 18d; 18e; 18f) se raccordant après un actionnement au moins essentiellement à chant avec une surface extérieure (46a; 46b; 46c; 46d; 46e; 46f) du boîtier de poignée (32a; 32b; 32c; 32d; 32e; 32f).

15. Machine-outil portable selon l'une des revendications précédentes, **caractérisée par** au moins un boîtier de poignée (32a; 32b; 32c; 32d; 32e; 32f), la plage d'actionnement (20a; 20b; 20c; 20d; 20e; 20f) de l'élément de libération (18a; 18b; 18c; 18d; 18e; 18f) et une plage d'actionnement (34a; 34b; 34c; 34d) d'un autre élément de libération (28a; 28b; 28c; 28d) de l'unité de commutation (14a; 14b; 14c; 14d; 14e; 14f) se raccordant après un actionnement au moins essentiellement à chant avec une surface extérieure (46a; 46b; 46c; 46d; 46e; 46f) du boîtier de poignée (32a; 32b; 32c; 32d; 32e; 32f).

16. Machine-outil portable selon l'une des revendications précédentes, **caractérisée en ce que** l'élément de commutation encliquetable (16a; 16b; 16c; 16d; 16e; 16f; 16g) est monté à pivotement autour d'un axe de déplacement (26a; 26b; 26c; 26d; 26e; 26f; 26g) de l'élément de commutation encliquetable (16a; 16b; 16c; 16d; 16e; 16f; 16g) configuré comme axe de pivotement (48a; 48b; 48c; 48d; 48e; 48f; 48g).
